# EUROPÄISCHE PATENTANMELDUNG

(11) **EP 4 575 479 A1**
(43) Veröffentlichungstag der Anmeldung: **25.06.2025**
(21) Anmeldenummer: 23220188.9
(22) Anmeldetag: 22.12.2023
(51) Int. Cl.: G01N 25/48

(54) **THERMOANALYTISCHE BESTIMMUNG VON ALKALI- UND/ODER ERDALKALIMETALLEN UND/ODER VERWANDTEN METALLEN**

(71) Anmelder: Netzsch Gerätebau GmbH, 95100 Selb (DE); Julius-Maximilians-Universität Würzburg, 97070 Würzburg (DE)
(72) Erfinder: PREITSCHOPF, Tobias, 97072 Würzburg (DE); SCHÖNEICH, Michael, 95100 Selb (DE); KALLFAß, Christoph, 74523 Schwäbisch Hall (DE); FINZE, Maik, 97295 Waldbrunn (DE)
(74) Vertreter: Isarpatent

(57) **Zusammenfassung**

Die vorliegende Erfindung betrifft ein Verfahren zur thermoanalytischen Bestimmung von Alkali- und/oder Erdalkalimetallen und/oder verwandten Metallen.

## Beschreibung

### Gebiet der Erfindung

Die Erfindung betrifft ein Verfahren zur thermoanalytischen Bestimmung von Alkali- und/oder Erdalkalimetallen und/oder verwandten Metallen. Die Erfindung betrifft ferner die Verwendung von Gold zur thermoanalytischen Messung einer Probe umfassend mindestens ein Alkali- und/oder Erdalkalimetall und/oder verwandtes Metall.

### Stand der Technik

Die Entwicklung von Analysemethoden zur Untersuchung der Eigenschaften von Substanzen sowie zur Bestimmung und Quantifizierung von Komponenten einer Zusammensetzung ist seit langer Zeit von großer Bedeutung in Industrie und Forschung. Je nach Analysemethode muss die zu untersuchende Probe allerdings häufig aufwendig präpariert werden, um repräsentative Messergebnisse erzielen zu können. Weiterhin werden oftmals nur Informationen über einen Teil der Probe, wie z. B. deren Oberfläche gewonnen. Demnach besteht der Bedarf an der Entwicklung von einfachen und unkomplizierten Analysemethoden, die einen möglichst hohen Informationsgehalt über die zu untersuchende Probe liefern.

Insbesondere die Bestimmung von Alkalimetallen ist in der Batterietechnik von großer Bedeutung. Im Stand der Technik sind beispielsweise nasschemische Verfahren zur Lithiumbestimmung in Batteriematerialien bekannt. Dabei muss die zu analysierende Probe, meist ein Feststoff, zuerst quantitativ mittels geeigneter Aufschlussverfahren (z. B. Säureaufschluss) in Lösung überführt werden. Unlösliche Bestandteile werden abfiltriert. Die so gewonnene Analysenlösung wird mittels spektroskopischer Methoden (z. B. Atomabsorptionsspektroskopie) gegen eine Standardlösung mit bekanntem Analytgehalt vermessen. Aus dem Vergleich der Intensität der Messung der Analysenlösung gegenüber der Intensität der Messung der Standardlösung wird die Konzentration des Analyten ermittelt. Dieses Vorgehen ermöglicht es, den Gesamtgehalt eines Analyten in einem Feststoff zu ermitteln. Diese Verfahren haben allerdings den Nachteil einer aufwendigen Probenpräparation.

Ein weiteres Verfahren zur Bestimmung von Lithium ist die Festkörper-Li-NMR. Der Feststoff kann gegebenfalls auch ohne Lösungsvorgang direkt als Feststoff nach aufwendiger Probenpräparation in einem Rotator gemessen werden. Das Kernspinresonanzverfahren (NMR) ist allerdings oftmals durch die Anwesenheit von anderen Kernen mit einem großen Quadrupolmoment erschwert bzw. limitiert. Dies betrifft vor allem die für Elektrodenmaterialien relevanten Übergangsmetalle der 3d-Reihe.

Weiterhin sind gängige spektroskopische Verfahren am Feststoff für die Alkalimetallbestimmung bekannt. Beispielsweise liefert die energiedispersive Röntgenspektroskopie lokale Informationen zum Alkalimetallgehalt. Allerdings setzt die Bestimmung des Gesamtgehalts an Alkalimetall in der Probe eine homogene Verteilung des Analyten in der Probe voraus. Ferner ist oftmals eine Mehrfachanalyse von lokalen Alkalimetallgehalten nötig.

Demnach besteht der Bedarf an der Entwicklung von Verfahren zur Bestimmung von Alkali- und/oder Erdalkalimetallen, die einfach, unkompliziert und schnell durchzuführen sind. Ferner besteht der Bedarf an Verfahren zur Bestimmung von Alkali- und/oder Erdalkalimetallen, mit denen eine Probe nicht nur oberflächlich untersucht, sondern die Bestimmung für das gesamte Volumen der Probe erfolgen kann. Weiterhin besteht der Bedarf an der Entwicklung von einfachen, unkomplizierten und schnellen Verfahren zur Bestimmung des Alkali- und/oder Erdalkalimetallgehalts einer Probe. Außerdem besteht der Bedarf an der Entwicklung von Verfahren zur Bestimmung von Alkali- und/oder Erdalkalimetallen in Elektrodenmaterialien und/oder des Gehalts an Alkali- und/oder Erdalkalimetallen in Elektrodenmaterialien. Schließlich besteht der Bedarf an einem Verfahren, mit dem der Ladezustand (State of Charge, SOC) einer Elektrode einer Batterie bestimmt werden kann.

### Zusammenfassung der Erfindung

In einem ersten Aspekt stellt die vorliegende Erfindung ein Verfahren zur thermoanalytischen Bestimmung von Alkali- und/oder Erdalkalimetallen und/oder verwandten Metallen bereit, wobei das Verfahren das Bereitstellen Probe umfassend mindestens ein Alkali- und/oder Erdalkalimetall und/oder verwandtes Metall und das Durchführen einer thermoanalytischen Messung der Probe umfasst. Dabei steht die Probe bei der thermoanalytischen Messung mit Gold in Kontakt und die Probe ist im Wesentlichen frei von Lösungsmitteln.

Durch das erfindungsgemäße Verfahren ist eine einfache, unkomplizierte und schnelle Bestimmung von Alkali- und/oder Erdalkalimetallen und/oder verwandten Metallen in Proben umfassend mindestens ein Alkali- und/oder Erdalkalimetall und/oder verwandtes Metall möglich. Eine aufwendige Probenpräparation wie bei nasschemischen Verfahren wird vermieden. Im Gegensatz zu Verfahren, mit denen lediglich die Untersuchung eines Teils einer Probe wie der Oberfläche möglich ist, kann die Probe mittels des erfindungsgemäßen Verfahrens im Hinblick auf ihr gesamtes Volumen analysiert werden. Ferner ist mit dem erfindungsgemäßen Verfahren eine einfache, unkomplizierte und schnelle Bestimmung des Gehalts mindestens eines Alkali- und/oder Erdalkalimetalls und/oder verwandten Metalls einer Probe möglich. Weiterhin ermöglicht das erfindungsgemäße Verfahren die Bestimmung von Alkali- und/oder Erdalkalimetallen und/oder verwandten Metallen in Elektroden und/oder Elektrodenmaterialien und/oder des Gehalts an Alkali und/oder Erdalkalimetallen und/oder verwandten Metallen in Elektroden und/oder Elektrodenmaterialien. Dadurch ist insbesondere die einfache und unkomplizierte Bestimmung des Ladungszustands einer Elektrode einer Batterie möglich. Im Vergleich zu Verfahren aus dem Stand der Technik, wie zum Beispiel der NMR, ist das Verfahren mit einem geringeren Investitionsaufwand verbunden. Ferner ist die technische Komplexität des erfindungsgemäßen Verfahrens gering, wodurch die Durchführung ein geringeres Erfahrungslevel voraussetzt.

In einem weiteren Aspekt stellt die vorliegende Erfindung eine Verwendung von Gold zur thermoanalytischen Messung einer Probe umfassend mindestens ein Alkali- und/oder Erdalkalimetall und/oder verwandtes Metall bereit. Die Probe ist dabei im Wesentlichen frei von Lösungsmitteln und steht bei der thermoanalytischen Messung mit dem Gold in Kontakt.

Durch die erfindungsgemäße Verwendung ist eine einfache, unkomplizierte und schnelle Bestimmung von Alkali- und/oder Erdalkalimetallen und/oder verwandten Metallen in Proben umfassend mindestens ein Alkali- und/oder Erdalkalimetall und/oder verwandtes Metall möglich. Die obigen Vorteile des erfindungsgemäßen Verfahrens gelten für die erfindungsgemäße Verwendung analog.

Weitere Aspekte der vorliegenden Erfindung sind den abhängigen Ansprüchen und der detaillierten Beschreibung zu entnehmen.

### Figuren

Die beiliegenden Zeichnungen sollen Ausführungsformen der vorliegenden Erfindung veranschaulichen und ein weiteres Verständnis dieser vermitteln. Im Zusammenhang mit der Beschreibung dienen sie der Erklärung von Konzepten und Prinzipien der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander dargestellt. Gleiche, funktionsgleiche und gleich wirkende Elemente, Merkmale und Komponenten sind in den Figuren der Zeichnungen, sofern nichts anderes ausgeführt ist, jeweils mit denselben Bezugszeichen versehen.

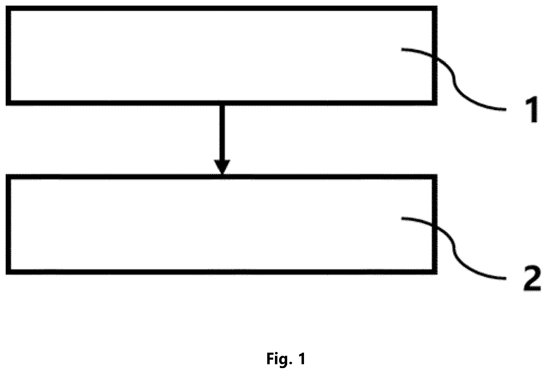

Fig. 1: Schematische Darstellung eines erfindungsgemäßen Verfahrens zur thermoanalytischen Bestimmung von Alkali- und/oder Erdalkalimetallen und/oder verwandten Metallen, wobei das Verfahren das Bereitstellen einer Probe umfassend mindestens ein Alkali- und/oder Erdalkalimetall und/oder verwandtes Metall 1 und das Durchführen einer thermoanalytischen Messung der Probe 2 umfasst.

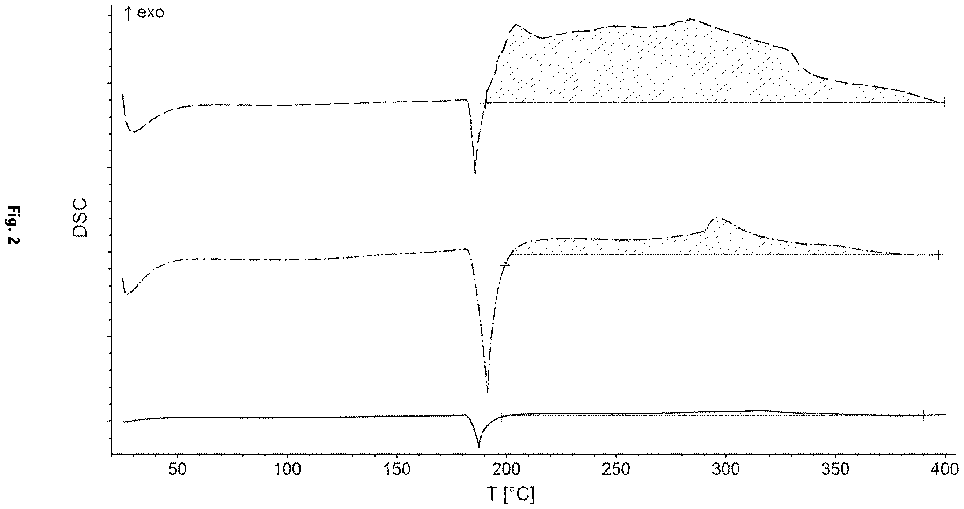

Fig. 2: Darstellung von DSC-Messungen lithiumhaltiger Proben. Die gestrichelte Linie stellt ein Messsignal eines beispielhaften erfindungsgemäßen Verfahrens dar, wobei eine Lithiumfolie in einem Edelstahltiegel mit Goldbeschichtung gemessen wurde. Die Strich-Punkt-Linie stellt ein Messsignal eines beispielhaften erfindungsgemäßen Verfahrens dar, wobei eine Lithiumfolie zusammen mit einer Goldfolie in einem Edelstahltiegel gemessen wurde. Die durchgezogene Linie stellt ein Messsignal einer DSC-Messung einer Lithiumfolie in einem Edelstahltiegel dar. Die schraffierten Flächen unterhalb der Linien stellen die Integrale der exothermen Signale dar.

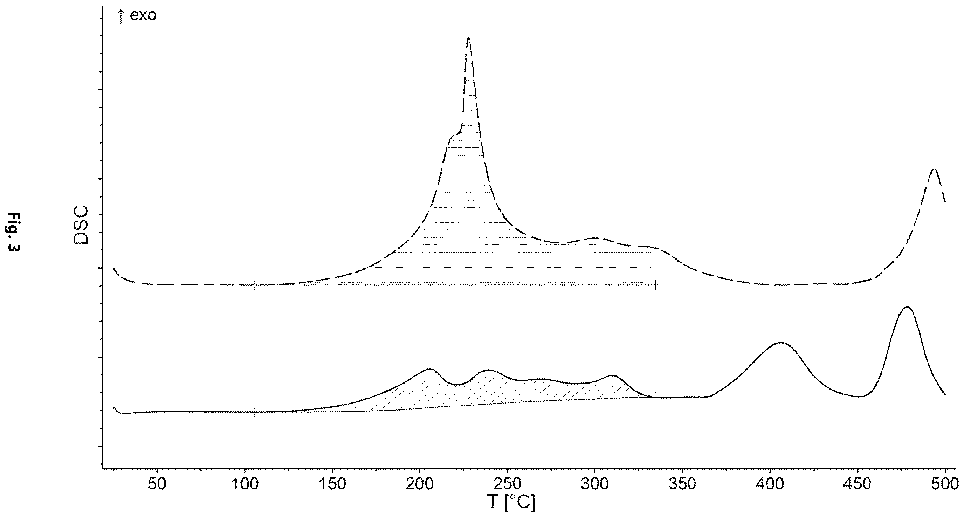

Fig. 3: Darstellung von DSC-Messungen von getrockneten und nicht getrockneten lithiumhaltigen Proben. Die gestrichelte Linie stellt ein Messsignal einer DSC-Messung dar, wobei eine nicht getrocknete Lithiummanganat-Probe in einem Edelstahltiegel mit Goldbeschichtung gemessen wurde. Die durchgezogene Linie stellt ein Messsignal eines beispielhaften erfindungsgemäßen Verfahrens dar, wobei eine getrocknete Lithiummanganat-Probe in einem Edelstahltiegel mit Goldbeschichtung gemessen wurde. Die schraffierten Flächen unterhalb der Linien stellen die Integrale der exothermen Signale dar.

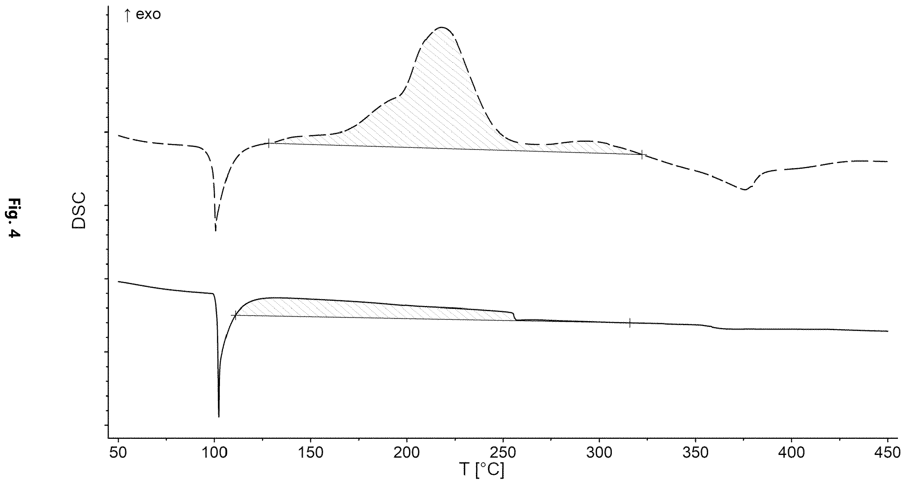

Fig. 4: Darstellung von DSC-Messungen natriumhaltiger Proben. Die gestrichelte Linie stellt ein Messsignal eines beispielhaften erfindungsgemäßen Verfahrens dar, wobei eine getrocknete natriumhaltige Probe in einem Edelstahltiegel mit Goldbeschichtung gemessen wurde. Die durchgezogene Linie stellt ein Messsignal einer DSC-Messung einer getrockneten natriumhaltigen Probe in einem Edelstahltiegel dar. Die schraffierten Flächen unterhalb der Linien stellen die Integrale der exothermen Signale dar.

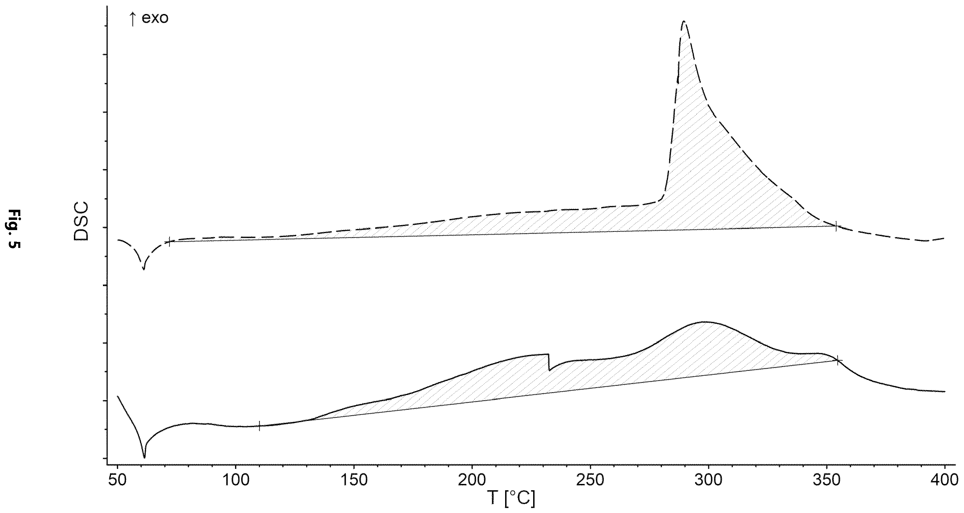

Fig. 5: Darstellung von DSC-Messungen kaliumhaltiger Proben. Die gestrichelte Linie stellt ein Messsignal eines beispielhaften erfindungsgemäßen Verfahrens dar, wobei eine getrocknete kaliumhaltige Probe in einem Edelstahltiegel mit Goldbeschichtung gemessen wurde. Die durchgezogene Linie stellt ein Messsignal einer DSC-Messung einer getrockneten kaliumhaltigen Probe in einem Edelstahltiegel dar. Die schraffierten Flächen unterhalb der Linien stellen die Integrale der exothermen Signale dar.

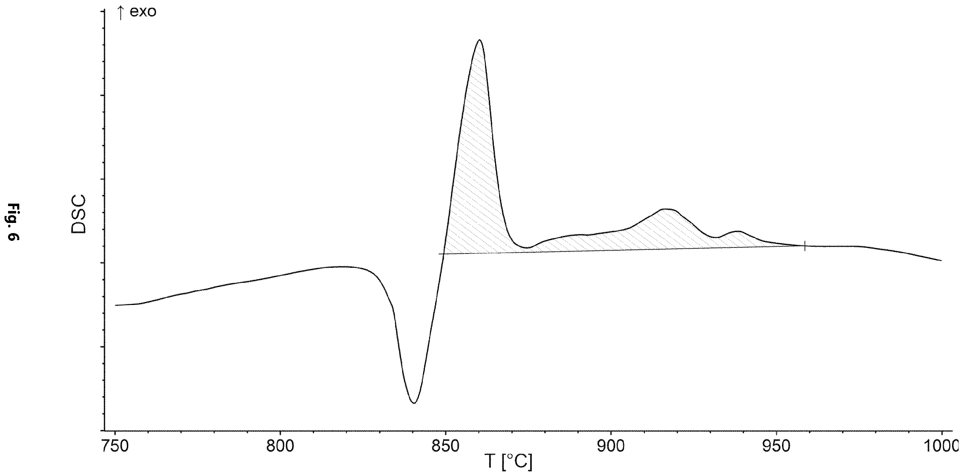

Fig. 6: Darstellung eines Messsignals eines beispielhaften erfindungsgemäßen Verfahrens, wobei eine getrocknete calciumhaltige Probe in einem Edelstahltiegel mit Goldbeschichtung gemessen wurde. Die schraffierte Fläche unterhalb der Linie stellt das Integral des exothermen Signals dar.

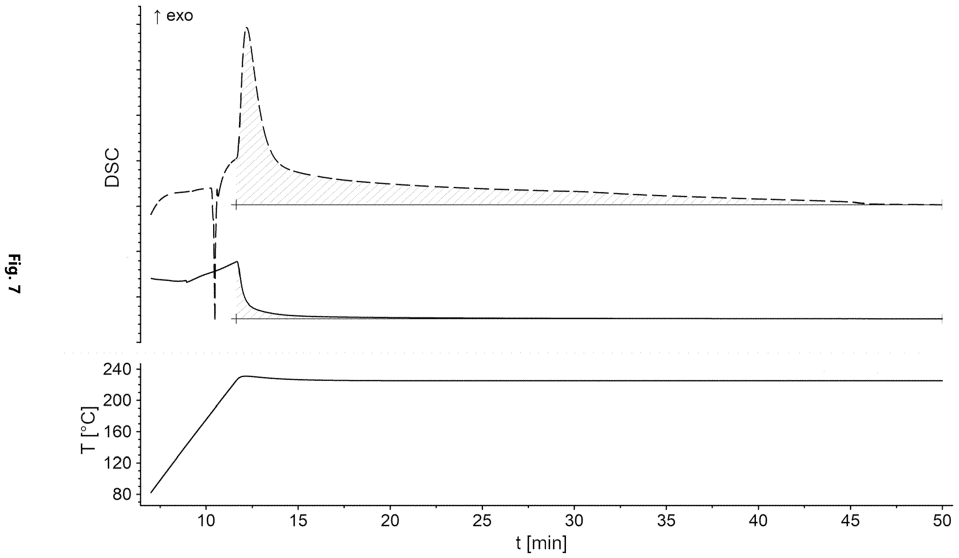

Fig. 7: Oben: Darstellung einer DSC-Messung mit isothermen Heizsegment einer lithiumhaltigen Probe. Die gestrichelte Linie stellt ein Messsignal eines beispielhaften erfindungsgemäßen Verfahrens dar, wobei eine Lithiumfolie in einem Edelstahltiegel mit Goldbeschichtung unter Verwendung eines isothermen Heizsegments gemessen wurde. Die durchgezogene Linie stellt ein Messsignal einer DSC-Messung mit isothermen Heizsegment eines Edelstahltiegels ohne Probe als Referenz dar. Die schraffierten Flächen unterhalb der Linien stellen die Integrale der exothermen Signale bzw. der Referenz dar. Unten: Darstellung des bei der DSC-Messung verwendeten Temperaturänderungsprogramms.

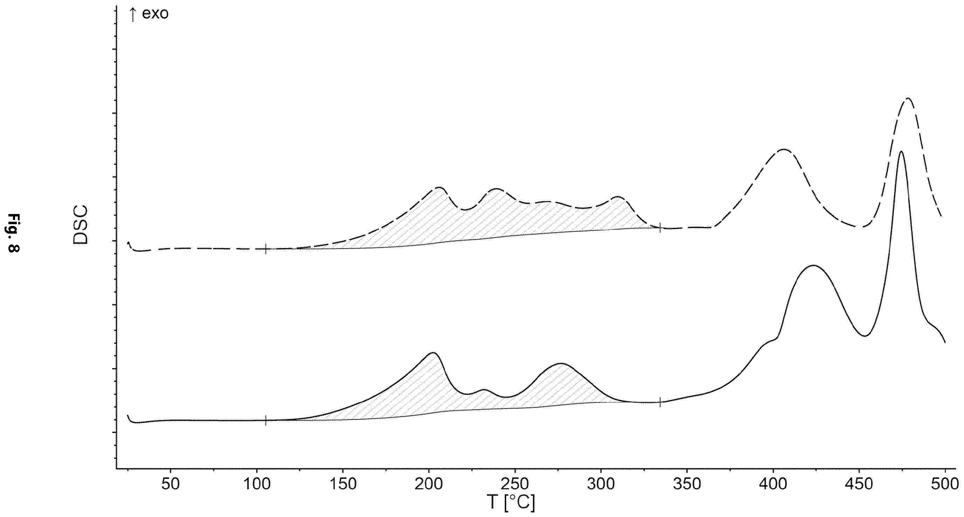

Fig. 8: Darstellung von DSC-Messungen von Lithiummanganat als Kathodenmaterial mit SOC 100. Die gestrichelte Linie stellt ein Messsignal eines beispielhaften erfindungsgemäßen Verfahrens dar, wobei getrocknetes Lithiummanganat mit SOC 100 in einem Edelstahltiegel mit Goldbeschichtung gemessen wurde. Die durchgezogene Linie stellt ein Messsignal einer DSC-Messung von getrocknetem Lithiummanganat mit SOC 100 in einem Edelstahltiegel dar. Die schraffierten Flächen unterhalb der Linien stellen die Integrale der exothermen Signale dar.

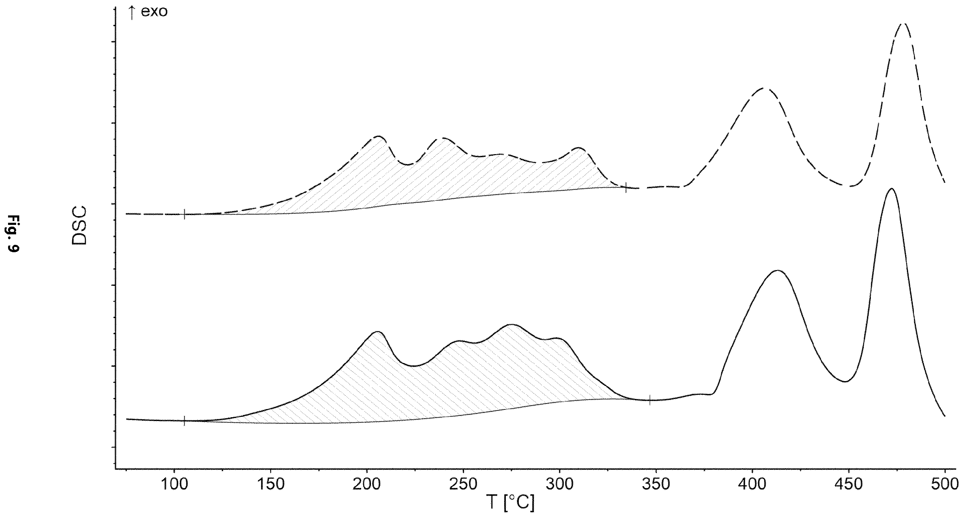

Fig. 9: Darstellung von DSC-Messungen von Lithiummanganat als Kathodenmaterial mit SOC 100 und SOC 50. Die gestrichelte Linie stellt ein Messsignal eines beispielhaften erfindungsgemäßen Verfahrens dar, wobei getrocknetes Lithiummanganat mit SOC 100 in einem Edelstahltiegel mit Goldbeschichtung gemessen wurde. Die durchgezogene Linie stellt ein Messsignal eines beispielhaften erfindungsgemäßen Verfahrens dar, wobei getrocknetes Lithiummanganat mit SOC 50 in einem Edelstahltiegel mit Goldbeschichtung gemessen wurde. Die schraffierten Flächen unterhalb der Linien stellen die Integrale der exothermen Signale dar.

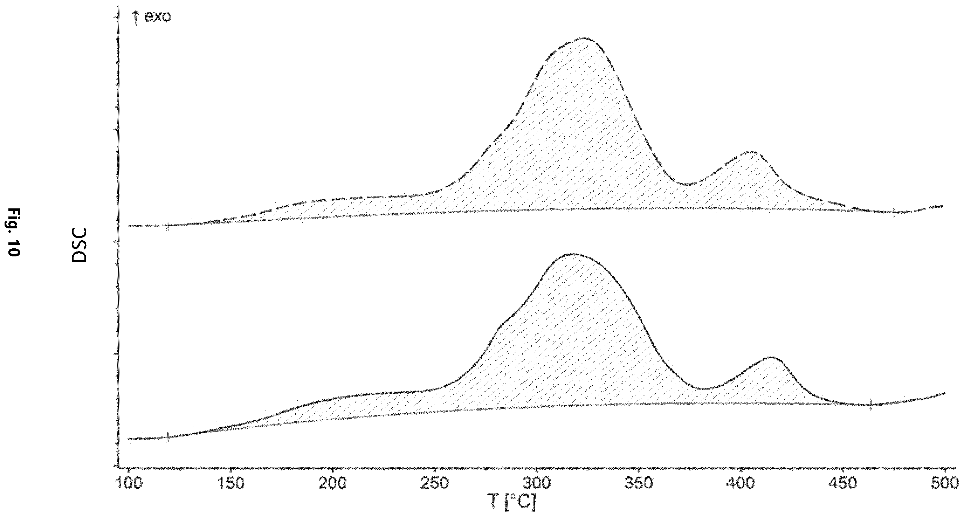

Fig. 10: Darstellung von DSC-Messungen von Lithiumcobaltat als Kathodenmaterial mit SOC 100. Die gestrichelte Linie stellt ein Messsignal eines beispielhaften erfindungsgemäßen Verfahrens dar, wobei getrocknetes Lithiumcobaltat mit SOC 100 in einem Edelstahltiegel mit Goldbeschichtung gemessen wurde. Die durchgezogene Linie stellt ein Messsignal einer DSC-Messung von getrocknetem Lithiumcobaltat mit SOC 100 in einem Edelstahltiegel dar. Die schraffierten Flächen unterhalb der Linien stellen die Integrale der exothermen Signale dar.

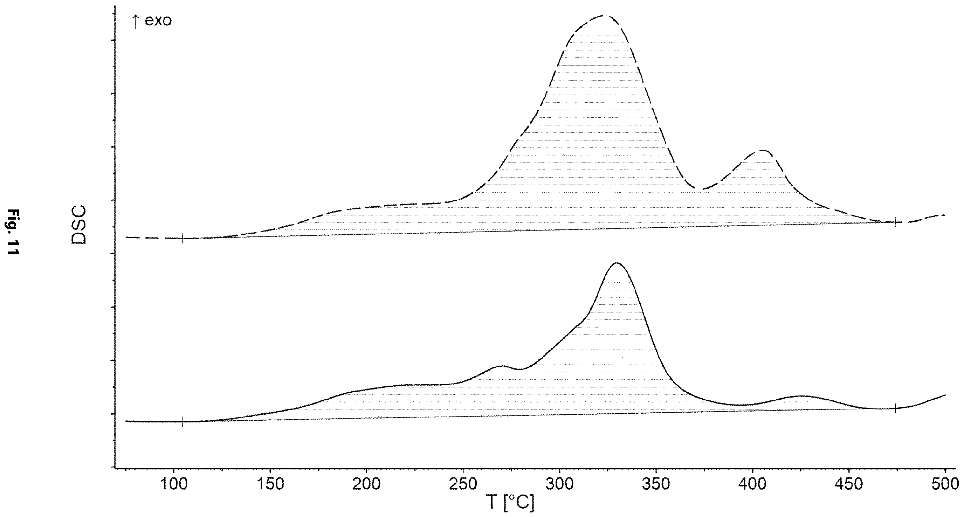

Fig. 11: Darstellung von DSC-Messungen von Lithiumcobaltat als Kathodenmaterial mit SOC 100 und SOC 0. Die gestrichelte Linie stellt ein Messsignal eines beispielhaften erfindungsgemäßen Verfahrens dar, wobei getrocknetes Lithiumcobaltat mit SOC 100 in einem Edelstahltiegel mit Goldbeschichtung gemessen wurde. Die durchgezogene Linie stellt ein Messsignal eines beispielhaften erfindungsgemäßen Verfahrens dar, wobei getrocknetes Lithiumcobaltat mit SOC 0 in einem Edelstahltiegel mit Goldbeschichtung gemessen wurde. Die schraffierten Flächen unterhalb der Linien stellen die Integrale der exothermen Signale dar.

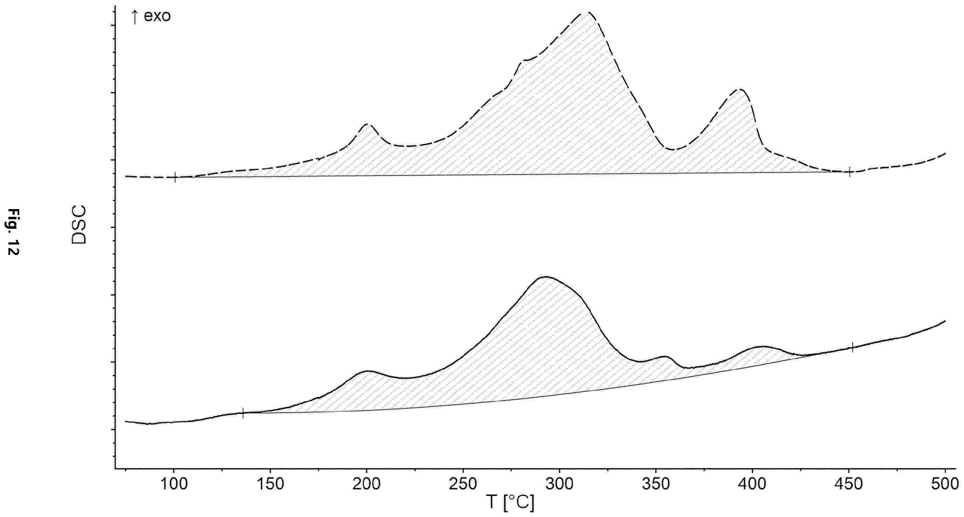

Fig. 12: Darstellung von DSC-Messungen von elementarem Lithium bei einer Heizrate von 3 K/min. Die gestrichelte Linie stellt ein Messsignal eines beispielhaften erfindungsgemäßen Verfahrens dar, wobei eine Lithiumfolie in einem Edelstahltiegel mit Goldbeschichtung gemessen wurde. Die durchgezogene Linie stellt ein Messsignal eines beispielhaften erfindungsgemäßen Verfahrens dar, wobei eine Lithiumfolie in einem Edelstahltiegel ohne Goldbeschichtung gemessen wurde. Die schraffierten Flächen unterhalb der Linien stellen die Integrale der exothermen Signale dar.

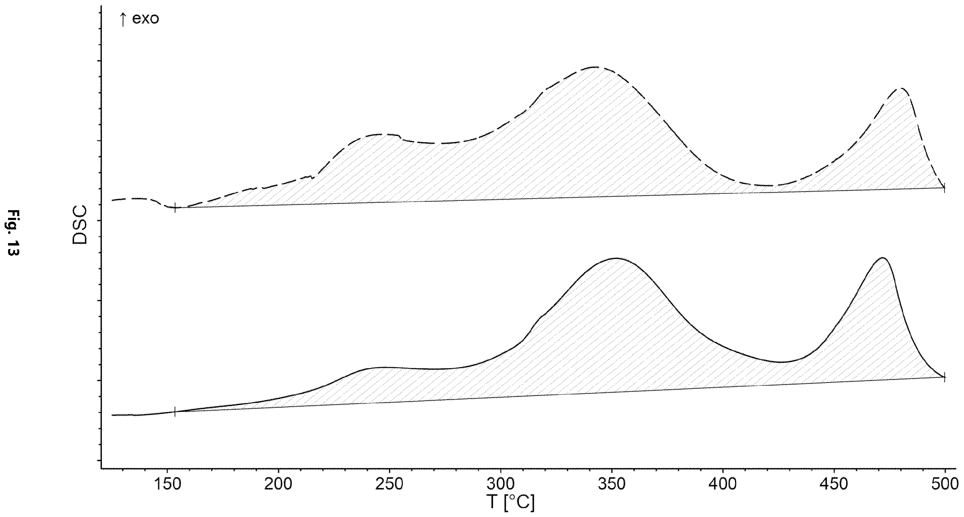

Fig. 13: Darstellung von DSC-Messungen von elementarem Lithium bei einer Heizrate von 30 K/min. Die gestrichelte Linie stellt ein Messsignal eines beispielhaften erfindungsgemäßen Verfahrens dar, wobei eine Lithiumfolie in einem Edelstahltiegel mit Goldbeschichtung gemessen wurde. Die durchgezogene Linie stellt ein Messsignal eines beispielhaften erfindungsgemäßen Verfahrens dar, wobei eine Lithiumfolie in einem Edelstahltiegel ohne Goldbeschichtung gemessen wurde. Die schraffierten Flächen unterhalb der Linien stellen die Integrale der exothermen Signale dar.

### Detaillierte Beschreibung der Erfindung

### Definitionen

So nicht anderweitig definiert haben hierin verwendete technische und wissenschaftliche Ausdrücke dieselbe Bedeutung, wie sie von einem Fachmann auf dem Fachgebiet der Erfindung gemeinhin verstanden wird.

Mengenangaben im Rahmen der vorliegenden Erfindung beziehen sich auf Gew.-%, soweit nicht anderweitig angegeben oder aus dem Kontext ersichtlich ist.

Ein verwandtes Metall ist im Rahmen der Erfindung nicht besonders beschränkt. Ein verwandtes Metall ist hierbei in seinen Eigenschaften einem Alkali- und/oder Erdalkalimetall ähnlich, beispielsweise hinsichtlich seiner Wertigkeit, sodass hierbei insbesondere ein- und zweiwertige Metalle wie beispielsweise Silber oder Kupfer als einwertige Metalle und die meisten Schwermetalle wie beispielsweise Kupfer, Zink, oder Cadmium, als zweiwertige Metalle umfasst sind.

Der Begriff "thermoanalytische Messung" ist im Rahmen der vorliegenden Erfindung nicht besonders limitiert, außer dass im Rahmen der vorliegenden Erfindung ausschließlich gravimetrische Methoden nicht durch den Begriff "thermoanalytische Messung" umfasst werden. Demnach umfasst der Begriff "thermoanalytische Messung" im Rahmen der vorliegenden Erfindung nicht die Thermogravimetrie an sich, allerdings beispielsweise die STA (simultane thermische Analyse, *Simultaneous Thermal Analysis*)*.* Im Rahmen der vorliegenden Erfindung können die Begriffe "thermoanalytische Messung" und "thermische Analyse" synonym verwendet werden. Wie allgemein bekannt, untersucht eine thermoanalytische Messung die physikalischen und chemischen Eigenschaften einer Probe, die sich mit der Temperatur verändern. Bei einer thermoanalytischen Messung werden physikalische und/oder chemische Eigenschaften einer Probe in Abhängigkeit von der Temperatur gemessen, während die Substanz einem Temperaturänderungsprogramm unterworfen ist. Das heißt, dass bei einer thermoanalytischen Messung eine Probe einer Anregung ausgesetzt wird, die eine beobachtbare Reaktion erzeugt. Das Antwortsignal, das dieser beobachtbaren Antwort entspricht, wird mit Messmitteln gemessen. Die Daten, die das Antwortsignal und die Anregung als Funktion der Zeit umfassen, werden verwendet, um eine thermoanalytische Messkurve zu berechnen, die die Identifizierung der thermischen Wirkung ermöglicht. In manchen Ausführungsformen ist die thermoanalytische Messung ausgewählt aus der Gruppe bestehend aus DSC (*Differential Scanning Calorimetry*), ARC (*Accelerating Rate Calorimetry*), MMC (*Multi*-*Modul Calorimetry*), DTA (*Differential Thermal Analysis*)*,* STA (*Simultaneous Thermal Analysis*) und Kombinationen davon.

Der Begriff "Kalorimetrie" ist im Rahmen der vorliegenden Erfindung nicht besonders limitiert. Wie allgemeint bekannt bezeichnet die Kalorimetrie die Messung von Wärmemengen, die an biologische, chemische oder physikalische Vorgänge gekoppelt sind und sowohl exotherm als auch endotherm sein können. Für die Bestimmung wird ein Kalorimeter verwendet.

Der Begriff "dynamische Differenzkalorimetrie" ist im Rahmen der vorliegenden Erfindung nicht besonders limitiert. Wie allgemein bekannt wird bei der dynamischen Differenzkalorimetrie (englisch *Differential Scanning Calorimetry,* DSC) die abgegebene oder aufgenommene Wärmemenge einer Probe bei Aufheizung, Abkühlung oder einem isothermen Prozess gemessen. Bei der DSC wird ein erster Messbehälter mit einer Probe und ein zweiter Messbehälter ohne Inhalt zusammen dem gleichen Temperaturänderungsprogramm ausgesetzt. Der erste und der zweite Messbehälter sind dabei identisch. Der zweite Messbehälter ohne Inhalt wird als Referenz bezeichnet. Infolge der Wärmekapazität der Probe und exothermen oder endothermen Prozessen und/oder Phasenänderungen wie Schmelzen oder Verdampfen kommt es zu Temperaturdifferenzen zwischen der Probe und der Referenz, da bei dem untersuchten Prozess thermische Energie in die oder aus der Probe fließt.

Der Begriff "Probe" ist im Rahmen der vorliegenden Erfindung nicht besonders limitiert, außer dass die Probe mindestens ein Alkalimetall und/oder mindestens ein Erdalkalimetall und/oder mindestens ein verwandtes Metall enthält. Die Begriffe "Probe" und "Analysenprobe" können synonym verwendet werden. Wie allgemein bekannt bezeichnet eine Probe die Gesamtheit eines zu untersuchenden Materials. Bei der Probe kann es sich um eine unter Normalbedingungen feste, flüssige oder wachsartige Probe handeln. Insbesondere kann es sich bei der Probe um eine unter Normalbedingungen feste Probe handeln.

Der Begriff "Normalbedingungen" bezeichnet im Rahmen der vorliegenden Erfindung eine Temperatur von 20 °C und einen Druck von 1,013 bar. Die Begriffe "Normalbedingungen", Standardbedingungen" und "Laborbedingungen" können synonym verwendet werden.

Der Begriff "Elektrode" ist im Rahmen der vorliegenden Erfindung nicht besonders limitiert. Wie allgemein bekannt ist eine Elektrode ein Elektronenleiter, der im Zusammenspiel mit einer Gegenelektrode (Anode - Kathode) mit einem zwischen beiden Elektroden befindlichen Medium in Wechselwirkung steht. Im Rahmen der vorliegenden Erfindung kann die Elektrode eine Kathode und/oder eine Anode sein. In manchen Ausführungsformen ist die Elektrode eine Elektrode einer Batterie, beispielsweise einer Lithiumbatterie, Natriumbatterie, Alkali-Mangan-Batterie, Zinn-basierten Batterie, Schwefelbasierten Batterie, Zink-basierten Batterie, Polymer-basierten Batterie, etc., ist jedoch nicht darauf beschränkt. Eine Batterie umfasst hierbei insbesondere Primär- und Sekundärbatterien und ist nicht besonders beschränkt.

Der Begriff "Lösungsmittel" ist im Rahmen der vorliegenden Erfindung nicht besonders limitiert. Wie allgemein bekannt bezeichnet ein Lösungsmittel einen Stoff, der Gase, Flüssigkeiten oder Feststoffe lösen und dabei verdünnen kann, ohne dass es beim Lösevorgang zu chemischen Reaktionen zwischen dem Lösungsmittel, dem zu lösenden und dem gelösten Stoff kommt. In der Regel werden als Lösungsmittel Flüssigkeiten wie Wasser und/oder flüssige anorganische und/oder organische Stoffe sowie Gemische davon, ggf. mit geeigneten und nicht beschränkten Additiven, eingesetzt. Im Rahmen der vorliegenden Erfindung ist ein Lösungsmittel unter Normalbedingungen flüssig. Ein geeignetes Lösungsmittel ist insbesondere ein Lösungsmittel, dass die Analytik nicht verfälscht, indem es der Analyse das mindestens eine Alkali- und/oder Erdalkalimetall und/oder verwandte Metall entzieht. Entsprechende Lösungsmittel sind hierbei einem analytischen Chemiker bekannt.

Der Begriff "im Wesentlichen lösungsmittelfrei" ist im Rahmen der vorliegenden Erfindung nicht besonders limitiert. Dabei ist eine Probe im Wesentlichen lösungsmittelfrei, wenn der Gehalt an Lösungsmittel in der Probe weniger als 0,5 Gew.-%, bevorzugt weniger als 0,1 Gew.-% und besonders bevorzugt weniger als 0,01 Gew.-%, bezogen auf das Gesamtgewicht der Probe, aufweist. Alternativ oder zusätzlich ist eine Probe im Wesentlichen lösungsmittelfrei, wenn der Gehalt an Lösungsmittel in der Probe einen Eigendampfdruck von maximal 10⁻¹ mbar, bevorzugt maximal 10⁻² mbar und besonders bevorzugt maximal 10⁻³ mbar beträgt. Der Eigendampfdruck kann hierbei beispielsweise mittels eines geeigneten Druckmessgeräts, beispielsweise an einer Schlenk-Line oder an einem Probenbehälter, gemessen werden.

Der Begriff "Referenz" bezeichnet im Rahmen der vorliegenden Erfindung einen zweiten Messbehälter ohne Inhalt, wobei der erste Messbehälter die zu messende Probe enthält und der erste und zweite Messbehälter identisch sind. Mit "identisch" ist gemeint, dass die Messbehälter die gleichen Eigenschaften und insbesondere den gleichen Aufbau, das gleiche Material, die gleichen Dimensionen und das gleiche Gewicht aufweisen.

Der Begriff "im Wesentlichen inert" ist im Rahmen der vorliegenden Erfindung nicht besonders limitiert. In manchen Ausführungsformen ist eine Atmosphäre im Wesentlichen inert, wenn die Atmosphäre einen Wassergehalt von maximal 10 ppm, bevorzugt maximal 5 ppm und besonderes bevorzugt maximal 1 ppm und einen Sauerstoffgehalt von maximal 10 ppm, bevorzugt maximal 5 ppm und besonderes bevorzugt maximal 1 ppm aufweist.

Ein erster Aspekt der Erfindung bezieht sich auf Verfahren zur thermoanalytischen Bestimmung von Alkali- und/oder Erdalkalimetallen und/oder verwandten Metallen, wobei das Verfahren das Bereitstellen einer Probe umfassend mindestens ein Alkali- und/oder Erdalkalimetall und/oder verwandtes Metall und das Durchführen einer thermoanalytischen Messung der Probe umfasst. Die Probe ist im Wesentlichen lösungsmittelfrei und steht bei der thermoanalytischen Messung mit Gold in Kontakt.

Erfindungsgemäß kann also eine Probe umfassend mindestens ein Alkalimetall, also ein Alkalimetall oder zwei oder mehr Alkalimetalle, eine Probe umfassend mindestens ein Erdalkalimetall, also ein Erdalkalimetall oder zwei oder mehr Erdalkalimetalle, eine Probe umfassend mindestens ein verwandtes Metall, also ein verwandtes Metall oder zwei oder mehr verwandte Metalle, oder eine Probe umfassend Mischungen davon, also mindestens ein Alkali- und mindestens ein Erdalkalimetall, mindestens ein Alkalimetall und mindestens ein verwandtes Metall, mindestens ein Erdalkalimetall und mindestens ein verwandtes Metall, oder mindestens ein Alkali-, mindestens ein Erdalkalimetall und mindestens ein verwandtes Metall, umfassen. Gemäß bestimmten Ausführungsformen umfasst die Probe mindestens ein Alkalimetall, also ein Alkalimetall oder zwei oder mehr Alkalimetalle. Gemäß bestimmten Ausführungsformen umfasst die Probe mindestens ein Erdalkalimetall, also ein Erdalkalimetall oder zwei oder mehr Erdalkalimetalle. Gemäß bestimmten Ausführungsformen umfasst die Probe mindestens ein verwandtes Metall, also ein verwandtes Metall oder zwei oder mehr verwandte Metalle. Gemäß bestimmten Ausführungsformen umfasst die Probe mindestens ein Alkali- und mindestens ein Erdalkalimetall. Gemäß bestimmten Ausführungsformen umfasst die Probe mindestens ein Alkalimetall und mindestens ein verwandtes Metall. Gemäß bestimmten Ausführungsformen umfasst die Probe mindestens ein Erdalkalimetall und mindestens ein verwandtes Metall. Gemäß bestimmten Ausführungsformen umfasst die Probe mindestens ein Alkali-, mindestens ein Erdalkalimetall und mindestens ein verwandtes Metall.

Die Erfinder haben überraschenderweise herausgefunden, dass Messsignale einer Probe umfassend mindestens ein Alkali- und/oder Erdalkalimetall und/oder verwandtes Metall in einer thermoanalytischen Messung dieser Probe erzeugt werden können, wenn die Probe mit Gold in Kontakt steht. Ohne an eine bestimmte Theorie gebunden sein zu wollen wird davon ausgegangen, dass eine exotherme Reaktion zwischen dem Gold und dem Alkali- und/oder Erdalkalimetall und/oder verwandtem Metall während der Durchführung der thermoanalytischen Messung stattfindet, die als Messsignal gemessen und ausgewertet werden kann. Dieses Messsignal kann genutzt werden, um qualitative und/oder quantitative Informationen über die Probe zu erlangen. Ferner haben die Erfinder herausgefunden, dass die Anwesenheit von Lösungsmitteln die Bestimmung stört und das Messsignal verfälscht. Die Auswertung von Messsignalen von thermoanalytischen Messungen ist dem Fachmann hinlänglich bekannt.

Ohne an eine bestimmte Theorie gebunden sein zu wollen wird ferner davon ausgegangen, dass sich bei der Reaktion zwischen dem Gold und dem Alkali- und/oder Erdalkalimetall und/oder verwandtem Metall eine Legierung und/oder eine feste Lösung und/oder eine intermetallische Verbindung ausbildet.

"In Kontakt stehen" bedeutet dabei, dass sich zumindest ein Teil der Probe und zumindest ein Teil des Goldes berühren und/oder zumindest ein Teil der Probe und zumindest ein Teil des Goldes eine Kontaktfläche aufweisen. Gemäß manchen Ausführungsformen stehen die Probe und das Gold derart in Kontakt, dass die Probe und/oder das Alkali- und/oder Erdalkalimetall und/oder verwandte Metall der Probe mit dem Gold reagieren kann.

Das Durchführen der thermoanalytischen Messung kann dabei die Verwendung von handelsüblichen Analysegeräten, wie beispielsweise Kalorimeter einschließen. Solche Analysegeräte sind kommerziell erhältlich und werden bevorzugt gemäß den jeweiligen Herstellerangaben bedient.

Die Probe enthält mindestens ein Alkalimetall und/oder mindestens ein Erdalkalimetall und/oder mindestens ein verwandtes Metall. Das Alkalimetall kann ausgewählt sein aus der Gruppe bestehend aus Lithium (Li), Natrium (Na), Kalium (K), Rubidium (Rb), Cäsium (Cs) und Francium (Fr), sowie Mischungen davon. Das Erdalkalimetall kann ausgewählt sein aus der Gruppe bestehend aus Beryllium (Be), Magnesium (Mg), Calcium (Ca), Strontium (Sr), Barium (Ba) und Radium (Ra), sowie Mischungen davon. Das verwandte Metall kann insbesondere aus weiteren ein- und zweiwertigen Metallen wie Silber, Kupfer, Zink, Cadmium, und Mischungen davon ausgewählt werden. In manchen Ausführungsformen ist das Alkalimetall ausgewählt aus der Gruppe bestehend aus Lithium, Natrium, Kalium und Cäsium. Gemäß bestimmten Ausführungsformen ist das Alkalimetall ausgewählt aus der Gruppe bestehend aus Lithium, Kalium und Cäsium. In einigen Ausführungsformen ist das Alkalimetall Lithium. Gemäß manchen Ausführungsformen ist das Erdalkalimetall ausgewählt aus der Gruppe bestehend aus Beryllium, Magnesium, Calcium, Strontium und Barium. In bestimmten Ausführungsformen ist das Erdalkalimetall ausgewählt aus der Gruppe bestehend aus Magnesium und Calcium. In einigen Ausführungsformen ist das Erdalkalimetall Calcium. Gemäß manchen Ausführungsformen enthält die Probe mindestens ein Alkalimetall. In bestimmten Ausführungsformen enthält die Probe Lithium. Gemäß einiger Ausführungsformen ist das Verfahren ein Verfahren zur thermoanalytischen Bestimmung von Lithium.

In manchen Ausführungsformen ist das Verfahren ein Verfahren zur thermoanalytischen Bestimmung des Gehalts mindestens eines Alkalimetalls und/oder eines Erdalkalimetalls und/oder eines verwandten Metalls einer Probe. In einigen Ausführungsformen ist das Verfahren ein Verfahren zur thermoanalytischen Bestimmung des Lithiumgehalts einer Probe, insbesondere eines Elektrodenmaterials. Gemäß bestimmten Ausführungsformen ist das Verfahren ein Verfahren zur kalorimetrischen Bestimmung des Lithiumgehalts einer Probe, insbesondere eines Elektrodenmaterials.

In einigen Ausführungsformen wird die Probe vor der Durchführung der thermoanalytischen Messung getrocknet. Das Trocknen der Probe ist dabei nicht besonders limitiert. Gemäß mancher Ausführungsformen wird zur Trocknung der Probe eine Trocknungsvorrichtung verwendet. Eine geeignete Trocknungsvorrichtung kann ein Ofen wie ein Muffelofen und/oder ein Trockenschrank sein. Alternativ oder zusätzlich kann die Probe auch in situ im Rahmen des Messverfahrens im Messgerät getrocknet werden, beispielsweise durch Fahren eines Heizprogramms zur Trocknung der Probe. Alternativ oder zusätzlich kann die Probe im Vakuum getrocknet werden. Geeignete Vorrichtungen zum Trocknen im Vakuum schließen ein Vakuumtrockner, ein Rotationsverdampfer und/oder eine Schlenk-Line mit Vakuumpumpe ein. Durch das Trocknen der Probe kann sichergestellt werden, dass die Probe im Wesentlichen frei von Lösungsmitteln ist. Das Trocknen der Probe kann dabei insbesondere derart durchgeführt werden, dass die Probe nach dem Trocknen lösungsmittelfrei ist. Das Trocknen der Probe vor der thermoanalytischen Messung ist vorteilhaft, da die Probe nicht gleich im Wesentlichen lösungsmittelfrei bereitgestellt werden muss und die Probenwahl dadurch flexibler wird.

Auch ist es in einem erfindungsgemäßen Verfahren möglich, dass eine Präparation der Probe unter einem Inertgas erfolgt, wie auch nachfolgend noch weiter beschrieben. Inertgas bedeutet hierbei, dass eine Reaktion zwischen Inertgas und Probe unter den Arbeitsbedingungen auszuschließen ist, sodass das Inertgas auch abhängig vom zu untersuchenden mindestens einen Alkalimetall und/oder Erdalkalimetall und/oder verwandten Metall bestimmt sein kann. So kann etwa Stickstoff bei Verwendung von Lithium zur Bildung von Lithiumnitrid führen, sodass beispielsweise bei der Lithiumbestimmung z.B. Argon als Inertgas bevorzugt sein kann.

In bestimmten Ausführungsformen wird bei der thermoanalytischen Messung zumindest ein Teil des mindestens einen Alkali- und/oder Erdalkalimetalls und/oder verwandten Metalls in der Probe umfassend mindestens ein Alkali- und/oder Erdalkalimetall und/oder verwandtes Metall mit zumindest einem Teil des Goldes reagieren gelassen. "Reagieren gelassen" bedeutet dabei, dass die Messbedingungen der thermoanalytischen Messung so eingestellt werden, dass eine Reaktion zwischen zumindest einem Teil des mindestens einen Alkali- und/oder Erdalkalimetalls und/oder verwandten Metalls und zumindest einem Teil des Goldes stattfindet. Die Wahl der Messbedingungen hängt dabei von den Eigenschaften der Probe und vom Alkali- und/oder Erdalkalimetall und/oder verwandten Metall ab. Anhand des durch die thermoanalytische Messung erzeugten Messsignals kann ermittelt werden, in welchem Temperaturbereich die Reaktion des Alkali- und/oder Erdalkalimetalls und/oder verwandten Metalls mit dem Gold stattfindet.

Gemäß manchen Ausführungsformen handelt es sich bei der thermoanalytischen Messung um eine Kalorimetrie und/oder eine kalorimetrische Messung. Alternativ oder zusätzlich kann es sich bei der thermoanalytischen Messung um eine Differenz-Thermoanalyse (DTA) handeln. In bestimmten Ausführungsformen ist die thermoanalytische Messung ausgewählt aus der Gruppe bestehend aus DSC (*Differential Scanning Calorimetry*), ARC (*Accelerating Rate Calorimetry*)*,* MMC (*Multi*-*Modul Calorimetry*), DTA (*Differential Thermal Analysis*), STA (*Simultaneous Thermal Analysis*) und Kombinationen davon. Gemäß einigen Ausführungsformen ist die thermoanalytische Messung ausgewählt aus der Gruppe bestehend aus DSC, ARC, MMC und STA. In bestimmten Ausführungsformen ist die thermoanalytische Messung eine dynamische Differenzkalorimetrie (DSC).

Gemäß bestimmten Ausführungsformen kann die thermoanalytische Messung die Durchführung eines Temperaturänderungsprogramms umfassen. Das Temperaturänderungsprogramm kann dabei eine dynamische Heizrate und/oder ein isothermes Heizsegment umfassen. In manchen Ausführungsformen umfasst das Temperaturänderungsprogramm das Erhitzen der Probe und optional einer Referenz von einer ersten Temperatur auf eine zweite Temperatur mittels einer Heizrate. Die Festlegung der ersten Temperatur, der zweiten Temperatur und der Heizrate hängt dabei von der Art und den Eigenschaften der zu untersuchenden Probe und des Alkali- und/oder Erdalkalimetalls und/oder verwandten Metalls ab. Zur Bestimmung von geeigneten Temperaturen und Heizraten kann beispielsweise zunächst ein erfindungsgemäßes Verfahren durchgeführt werden, wobei die Probe und optional die Referenz mittels eines Temperaturänderungsprogramms mit hoher Heizrate (z. B. 30 K/min) z.B. von 10°C oder von Raumtemperatur (22 °C) bis 1600 °C, beispielsweise bis 1000 °C, erhitzt wird. Anhand der Messsignale kann dann abgeschätzt werden, in welchem Temperaturbereich die Reaktion zwischen den Alkali- und/oder Erdalkalimetallen und/oder verwandten Metallen und dem Gold stattfindet. Anschließend können die Messparameter des Temperaturänderungsprogramms feinjustiert werden.

In manchen Ausführungsformen beträgt die erste Temperatur - 10 °C bis 150°C, bevorzugt 0 °C bis 100 °C und besonders bevorzugt 20 °C bis 40 °C oder 0 °C bis 20°C, letzteres beispielsweise wenn Cs bestimmt wird. Gemäß bestimmten Ausführungsformen beträgt die zweite Temperatur mindestens 300 °C, bevorzugt mindestens 400 °C und besonders bevorzugt mindestens 500 °C. Gemäß einigen Ausführungsformen beträgt die zweite Temperatur maximal 1600 °C, bevorzugt maximal 1200 °C und besonders bevorzugt maximal 1000 °C. Für manche Proben kann auch eine geringere zweite Temperatur geeignet sein von maximal 900 °C, maximal 800 °C, maximal 700 °C, maximal 600°C oder maximal 500°C, beispielsweise bei der Bestimmung von Li. Die Heizrate kann dabei beispielsweise 3 bis 30 K/min betragen.

Alternativ oder zusätzlich kann das Temperaturänderungsprogramm das Halten der Probe (isotherm) und optional einer Referenz bei einer Temperatur für eine Haltezeit umfassen. Wie oben bereits ausgeführt hängt auch hier die Festlegung der Temperatur und der Haltezeit von der Art und den Eigenschaften der zu untersuchenden Probe und des Alkali- und/oder Erdalkalimetalls ab. Die Festlegung kann wie oben beschrieben durch geeignete Vorversuche erfolgen. In manchen Ausführungsformen beträgt die Temperatur mindestens 20°C, beispielsweise mindestens 25 °C, bevorzugt mehr als 25 °C. Eine niedrige Temperatur ist beispielsweise vorteilhaft, wenn Cäsium bestimmt werden soll. Bei anderen Elementen wie beispielsweise Lithium sind höhere Temperatur vorteilhaft, z. B. 200 °C bis 240 °C. In manchen Ausführungsformen beträgt die Temperatur 20 °C bis 1000 °C. Alternativ oder zusätzlich kann die Haltezeit mindestens 15 min (Minuten), beispielsweise mindestens 0,5 Stunden (h), betragen. In einigen Ausführungsformen beträgt die Haltezeit 15 Minuten bis 12 h, beispielsweise 0,5 bis 10 h, bevorzugt 1 bis 8 h und besonders bevorzugt 1,5 bis 5 h.

Gemäß manchen Ausführungsformen wird für die Durchführung der thermoanalytischen Messung ein Inertgasstrom eingestellt. Dabei wird der Inertgasstrom während der thermoanalytischen Messung über und/oder durch die Probe geleitet. Das Intertgas des Inertgasstroms kann dabei Helium (He), Argon (Ar) und/oder Stickstoff (N₂) sein und kann geeignet anhand des Analyten ausgewählt werden. In einigen Ausführungsformen beträgt der Fluss des Intergasstroms 5 bis 150 mL/min, bevorzugt 10 bis 100 mL/min und besonders bevorzugt 15 bis 80 mL/min.

In bestimmten Ausführungsformen liegt das Gold bezogen auf das mindestens eine Alkali- und/oder Erdalkalimetall und/oder verwandte Metall im Überschuss vor. Ein Überschuss bezieht sich dabei auf das Stoffmengenverhältnis. Dies ist insbesondere vorteilhaft, wenn eine quantitative oder teilquantitative Bestimmung des Gehalts des mindestens einen Alkali- und/oder Erdalkalimetalls und/oder verwandten Metalls in der Probe erfolgen soll. Ob ein Überschuss vorliegt, kann mittels geeigneter Vorüberlegungen und/oder einfachen Vorversuchen ermittelt werden. Der Überschuss bezieht sich dabei auf das Stoffmengenverhältnis. Alternativ oder zusätzlich kann das Gewichtsverhältnis der Probe zum Gold 1 : ≥ 1 betragen. Dadurch wird die Bestimmung des Gehalts des mindestens einen Alkali- und/oder Erdalkalimetalls und/oder verwandten Metalls der Probe weiterverbessert. In manchen Ausführungsformen beträgt das Gewichtsverhältnis der Probe zum Gold 1 : 1 bis 1 : 100. Gemäß manchen Ausführungsformen beträgt der Gehalt des mindestens einen Alkali- und/oder Erdalkalimetalls und/oder verwandten Metalls der Probe maximal 10 Gew.-%, bevorzugt maximal 3 Gew.-% und besonders bevorzugt maximal 1 Gew.-%.

Gemäß einigen Ausführungsformen wird die Probe vor der thermoanalytischen Messung in einen Messbehälter gefüllt und die Messung mit der Probe in dem Messbehälter durchgeführt. Der Messbehälter ist nicht besonders limitiert, außer dass der Messbehälter für eine thermoanalytische Messung geeignet sein muss. In manchen Ausführungsformen wird die Probe vor der thermoanalytischen Messung in einen ersten Messbehälter gefüllt und die Messung mit der Probe in dem ersten Messbehälter und mit einem zweiten Messbehälter ohne Inhalt durchgeführt. Dabei sind der erste und der zweite Messbehälter identisch. Der zweite Messbehälter wird als Referenz bezeichnet. Alternativ oder zusätzlich kann die Probe in den Messbehälter eingewogen werden. In manchen Ausführungsformen ist die Probenmenge 0,5 bis 150 mg, bevorzugt 1 bis 100 mg und besonders bevorzugt 5 bis 20 mg.

In manchen Ausführungsformen umfasst der Messbehälter das Gold. Gemäß bestimmten Ausführungsformen umfasst der erste Messbehälter das Gold. Das Gold kann dabei als Goldfolie und/oder Goldpulver vorliegen. Beispielsweise kann das Gold in den Messbehälter vorgelegt und die Probe anschließend in den Messbehälter eingefüllt und/oder eingewogen werden. Alternativ oder zusätzlich kann die Probe vor dem Einfüllen in den Messbehälter mit Gold vermengt und/oder vermischt und die Probe mit dem Gold in den Messbehälter eingefüllt werden. Das Gold kann dabei als Goldfolie und/oder Goldpulver vorliegen. Alternativ oder zusätzlich kann der Messbehälter vergoldet und/oder mit Gold beschichtet sein oder sogar aus Gold bestehen. "Vergoldet" bedeutet hierbei, dass zumindest ein Teil des Messbehälters aus Gold besteht. Dabei ist das Gold so angeordnet, dass es mit der Probe in Kontakt stehen kann. Erfindungsgemäß ist auch nicht ausgeschlossen, dass der Messbehälter aus Gold besteht. Insbesondere mit einer Reinheit, wie diese kommerziell erhältlich ist, z.B. von 99,90 oder 99,95%.

Gemäß bestimmten Ausführungsformen ist der Messbehälter ein Tiegel. In manchen Ausführungsformen ist der Messbehälter ein Hochdruckbehälter und/oder ein Hochdrucktiegel. Der Messbehälter muss jedoch nicht ein Hochdruckbehälter sein.

In einigen Ausführungsformen wird der Messbehälter zur Durchführung der thermoanalytischen Messung hermetisch verschlossen. Dies ist vorteilhaft, wenn die thermoanalytische Messung und/oder das Verfahren unter inerten Bedingungen und/oder einer im Wesentlichen inerten Atmosphäre durchgeführt wird. Mit "inerten Bedingungen" sind Bedingungen gemeint, die den Kontakt der Probe mit Wasser und Sauerstoff weitgehend ausschließen, also Wasser und Sauerstoff mit den oben angegebenen Grenzen maximal vorliegen.

In bestimmten Ausführungsformen wird das Bereitstellen der Probe, das Trocknen der Probe, das Einfüllen der Probe in den Messbehälter und/oder das Durchführen der thermoanalytischen Messung unter inerten Bedingungen und/oder in einer im Wesentlichen inerten Atmosphäre durchgeführt. Dies ist vorteilhaft, wenn die Probe luft- und/oder wasserempfindlich ist.

In einigen Ausführungsformen umfasst die thermoanalytische Messung das Durchführen einer thermoanalytischen Kalibriermessung oder mehreren thermoanalytischen Kalibriermessungen. Die thermoanalytischen Kalibriermessungen erfolgen hierbei auch mit Kalibrierproben, die im Wesentlichen frei von Lösungsmitteln sind.

In einigen Ausführungsformen umfasst die thermoanalytische Messung das Durchführen einer thermoanalytischen Kalibriermessung. Die thermoanalytische Kalibriermessung wird mit einer Kalibrierprobe mit bekanntem Gehalt an mindestens einem Alkali- und/oder Erdalkalimetall und/oder verwandtem Metall durchgeführt. Die thermoanalytische Messung der Probe und die thermoanalytische Kalibriermessung der Kalibrierprobe werden dabei unter den gleichen Messbedingungen durchgeführt. Aus dem Abgleich der Messsignale der thermoanalytischen Kalibriermessung und der thermoanalytischen Messung kann der Gehalt des mindestens einen Alkali- und/oder Erdalkalimetalls und/oder verwandten Metalls der Probe bestimmt werden. Die Auswertung kann über Integration der Messsignale über einen Temperaturbereich erfolgen. Der Temperaturbereich hängt von der Art und den Eigenschaften der Probe und des mindestens einen Alkali- und/oder Erdalkalimetalls und/oder verwandten Metalls ab. Der Temperaturbereich wird insbesondere durch die Reaktionswärme der Reaktion zwischen dem mindestens einen Alkali- und/oder Erdalkalimetall und/oder verwandtem Metall und dem Gold bestimmt. Beispielsweise kann aus dem Verhältnis der durch die Integration der Messsignale erhaltenen Integralwerte auf den Gehalt des mindestens einen Alkali- und/oder Erdalkalimetalls und/oder verwandten Metalls geschlossen werden.

In manchen Ausführungsformen wird eine erste und eine zweite thermoanalytische Kalibriermessung durchgeführt. Die erste und die zweite thermoanalytische Kalibriermessung werden unter den gleichen Messbedingungen durchgeführt. Dabei steht bei der ersten thermoanalytischen Kalibriermessung die Kalibrierprobe mit Gold in Kontakt und bei der zweiten thermoanalytischen Kalibriermessung steht die Kalibrierprobe nicht mit Gold in Kontakt. Beispielsweise wird für die erste thermoanalytische Kalibriermessung die Kalibrierprobe mit Gold vermischt und die Mischung aus Kalibrierprobe und Gold gemessen. Bei der zweiten thermoanalytischen Kalibriermessung wird nur die Kalibrierprobe gemessen. Aus dem Abgleich der Messsignale der ersten und zweiten thermoanalytischen Kalibriermessung kann die Reaktionswärme der Reaktion zwischen dem mindesten einen Alkali- und/oder Erdalkalimetall und/oder verwandten Metall und dem Gold bestimmt werden. Diese Reaktionswärme kann dann als Referenzwert zur Bestimmung des Gehalts des mindestens einen Alkali- und/oder Erdalkalimetalls und/oder verwandten Metalls einer Probe verwendet werden. Die Messsignale der ersten und zweiten thermoanalytischen Kalibriermessung können dabei beispielsweise über einen Temperaturbereich integriert und die daraus entstandenen Integralwerte voneinander subtrahiert werden, um den Referenzwert zu erhalten. Insbesondere kann der Referenzwert durch Subtraktion des Integralwerts des Messsignals der zweiten thermoanalytischen Kalibriermessung von dem Integralwert des Messsignals der ersten thermoanalytischen Kalibriermessung bestimmt werden.

In einigen Ausführungsformen umfasst die Durchführung der thermoanalytischen Messung der Probe die Auswertung eines durch die thermoanalytische Messung erhaltenen Messsignals. Die Auswertung kann über Integration der Messsignale über einen Temperaturbereich erfolgen. Der Temperaturbereich hängt von der Art und den Eigenschaften der Probe und des mindestens einen Alkali- und/oder Erdalkalimetalls und/oder verwandten Metalls ab. Aus der Integration des Messsignals kann ein Integralwert erhalten werden. Aus dem Verhältnis des Integralwerts zu einem Referenzwert kann der Gehalt des mindestens einen Alkali- und/oder Erdalkalimetalls und/oder verwandten Metalls der Probe bestimmt werden. Der Referenzwert kann dabei entweder wie oben beschrieben bestimmt werden oder ist bereits bekannt und/oder in einer Vorrichtung zur Auswertung der thermoanalytischen Messung gespeichert.

Gemäß manchen Ausführungsformen ist die Probe umfassend mindestens ein Alkali- und/oder Erdalkalimetall und/oder verwandtes Metall zumindest ein Teil einer Elektrode. Alternativ oder zusätzlich ist die Probe umfassend mindestens ein Alkali- und/oder Erdalkalimetall und/oder verwandtes Metall zumindest ein Teil eines Elektrodenmaterials. Gemäß manchen Ausführungsformen ist die Probe umfassend mindestens ein Alkali- und/oder Erdalkalimetall und/oder verwandtes Metall eine Elektrode. Alternativ oder zusätzlich ist die Probe umfassend mindestens ein Alkali- und/oder Erdalkalimetall und/oder verwandtes Metall ein Elektrodenmaterial. In einigen Ausführungsformen ist die Elektrode eine Elektrode einer Batterie. Gemäß bestimmten Ausführungsformen ist das Elektrodenmaterial ein Elektrodenmaterial einer Batterie. In manchen Ausführungsformen ist die Probe ein alkalimetallhaltiges Elektrodenmaterial. Gemäß einigen Ausführungsformen ist die Probe eine alkalimetallhaltige Probe, wobei die Probe ein Elektrodenmaterial ist. Dabei kann das Alkalimetall bevorzugt ausgewählt sein aus der Gruppe bestehend aus Lithium, Natrium und optional Cäsium. In manchen Ausführungsformen ist das Elektrodenmaterial ein Kathodenmaterial.

Gemäß bestimmten Ausführungsformen enthält das Elektrodenmaterial mindestens ein Übergangsmetall, das nicht besonders beschränkt ist. Jedoch ist das Elektrodenmaterial nicht darauf beschränkt, und umfasst solche, wie sie in üblichen Batterien enthalten sind, wie sie oben definiert sind. In manchen Ausführungsformen enthält das Elektrodenmaterial mehrere Übergangsmetalle.

In bestimmten Ausführungsformen ist die Probe ein Elektrodenmaterial, wobei das Bereitstellen der Probe das Entnehmen von Elektrodenmaterial aus einer Batterie und das Waschen des Elektrodenmaterials umfasst. Das Waschen kann mit einem geeigneten Lösungsmittel erfolgen - wie oben beispielhaft erläutert, welches nicht beschränkt ist und insbesondere an das Elektrodenmaterial angepasst sein kann. Anschließend wird hierbei bevorzugt das Elektrodenmaterial durch das wie oben beschriebene Trocknen der Probe getrocknet.

Gemäß mancher Ausführungsformen umfasst das Verfahren eine Bestimmung des Ladungszustands (*State of Charge,* SOC) der Elektrode und/oder des Elektrodenmaterials. Das Verfahren kann dann auf die Bestimmung des Gehalts des mindestens einen Alkalimetalls und/oder Erdalkalimetalls und/oder verwandten Metalls, beispielsweise des Alkalimetallgehalts und insbesondere des Lithiumgehalts, der Probe gerichtet sein. Aus dem Gehalts des mindestens einen Alkalimetalls und/oder Erdalkalimetalls und/oder verwandten Metalls, beispielsweise dem Alkalimetallgehalt, kann auf den Ladungszustand der Elektrode und/oder des Elektrodenmaterials geschlossen werden. Die Bestimmung des Gehalts des mindestens einen Alkalimetalls und/oder Erdalkalimetalls und/oder verwandten Metalls, beispielsweise des Alkalimetallgehalts, kann über die oben beschriebenen thermoanalytischen Kalibriermessungen und/oder über einen Referenzwert, wie oben beschrieben, erfolgen. In bestimmten Ausführungsformen kann die Probe ein Elektrodenmaterial einer Lithiumbatterie und die Kalibrierprobe eine Lithiumfolie sein.

Ein beispielhaftes erfindungsgemäßes Verfahren zur thermoanalytischen Bestimmung von Alkali- und/oder Erdalkalimetallen ist schematisch in Figur 1 dargestellt, wobei das Verfahren das Bereitstellen einer alkali- und/oder erdalkalimetallhaltigen Probe 1 und das Durchführen einer thermoanalytischen Messung der Probe 2 umfasst.

Ein zweiter Aspekt der vorliegenden Erfindung bezieht sich auf eine Verwendung von Gold zur thermoanalytischen Messung einer Probe umfassend mindestens ein Alkali- und/oder Erdalkalimetall und/oder verwandtes Metall, wobei die Probe im Wesentlichen frei von Lösungsmitteln ist, und wobei die Probe bei der thermoanalytischen Messung mit dem Gold in Kontakt steht. Die obigen Ausführungen zum ersten Aspekt der Erfindung gelten hier analog.

In manchen Ausführungsformen ist die Probe umfassend mindestens ein Alkali- und/oder Erdalkalimetall und/oder verwandtes Metall zumindest ein Teil einer Elektrode und/oder ein Elektrodenmaterial. In manchen Ausführungsformen wird bei der thermoanalytischen Messung zumindest ein Teil des mindestens einen Alkali- und/oder Erdalkalimetalls und/oder verwandten Metalls in der Probe umfassend mindestens ein Alkali- und/oder Erdalkalimetall und/oder verwandtes Metall mit zumindest einem Teil des Goldes reagieren gelassen. Gemäß bestimmten Ausführungsformen ist die thermoanalytische Messung eine Kalorimetrie. Alternativ oder zusätzlich kann die thermoanalytische Messung eine Differenz-Thermoanalyse sein. In manchen Ausführungsformen ist die thermoanalytische Messung eine dynamische Differenzkalorimetrie. Auf obige Ausführungen zum ersten Aspekt der Erfindung wird vollumfänglich Bezug genommen.

Ein dritter Aspekt der vorliegenden Erfindung bezieht sich auf ein System zur thermoanalytischen Bestimmung von mindestens einem Alkali- und/oder Erdalkalimetall und/oder verwandten Metall, beispielsweise Lithium, umfassend eine thermoanalytische Messvorrichtung; ein Messbehälter; und eine Trocknungsvorrichtung, wobei der Messbehälter Gold umfasst. Die obigen Ausführungen zum ersten und zum zweiten Aspekt der Erfindung gelten hier analog. In manchen Ausführungsformen kann die thermoanalytische Messvorrichtung eine Vorrichtung zur Durchführung eines Verfahrens ausgewählt aus der Gruppe bestehend aus DSC, ARC, MMC, DTA, STA und Kombinationen davon sein. Gemäß bestimmten Ausführungsformen ist die thermoanalytische Messvorrichtung ein dynamisches Differenzkalorimeter. In einigen Ausführungsformen ist die Trocknungsvorrichtung ausgewählt aus einem Ofen, einem Trockenschrank, einem Vakuumtrockner, einem Rotationsverdampfer, einer Schlenk-Line mit Vakuumpumpe und Kombinationen davon. Auch kann die Trocknungsvorrichtung in der Messvorrichtung integriert sein. Auf obige Ausführungen zum ersten und zweiten Aspekt der Erfindung wird vollumfänglich Bezug genommen.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

### Beispiele

Die Erfindung wird im Anschluss mit Bezug auf verschiedene Beispiele davon weiter im Detail erläutert. Die Erfindung ist jedoch nicht auf diese Beispiele beschränkt.

### Beispiel 1: Beschreibung der Durchführung eines beispielhaften erfindungsgemäßen Verfahrens mit dynamischer Heizrate

Eine Probe umfassend mindestens ein Alkali- und/oder Erdalkalimetall und/oder verwandtes Metall wird getrocknet und in einen für thermoanalytische Messungen geeigneten Messbehälter, beispielsweise einen DSC-Tiegel, eingefüllt. Im Fall von Tiegeln ohne Goldbeschichtung wird zusätzlich Goldfolie oder Goldpulver im Überschuss als Reaktionspartner in die Tiegel gegeben. Im Fall von goldbeschichteten Tiegeln genügt das Einfüllen der Probe. Im Anschluss wird der Tiegel typischerweise verschlossen und der thermoanalytischen Messung zugeführt. Im Fall einer DSC-Analyse wird der Tiegel zusammen mit einem Referenztiegel einem Temperaturänderungsprogramm unterzogen. Dazu wird die Probe und die Referenz mit einer dynamischen Heizrate, z.B. 3-30 K/min, unter einem Inertgasstrom auf eine geeignete Temperatur, z.B. 500 °C, erhitzt.

### Beispiel 2: Beschreibung der Durchführung eines beispielhaften erfindungsgemäßen Verfahrens mit isothermen Heizsegment

Eine Probe umfassend mindestens ein Alkali- und/oder Erdalkalimetall und/oder verwandtes Metall wird getrocknet und in einen für thermoanalytische Messungen geeigneten Messbehälter, beispielsweise einen DSC-Tiegel, eingefüllt. Im Fall von Tiegeln ohne Goldbeschichtung wird zusätzlich Goldfolie oder Goldpulver im Überschuss als Reaktionspartner in die Tiegel gegeben. Im Fall von goldbeschichteten Tiegeln genügt das Einfüllen der Probe. Im Anschluss wird der Tiegel typischerweise verschlossen und der thermoanalytischen Messung zugeführt. Im Fall einer DSC-Analyse wird der Tiegel zusammen mit einem Referenztiegel auf einen geeigneten Temperaturwert aufgeheizt und der Proben- sowie der Referenztiegel einer isothermen Temperaturbehandlung unterzogen. Die Temperatur des isothermen Heizsegments wird so gewählt, dass die exotherme Reaktion zwischen dem Gold und dem mindestens einen Alkali- und/oder Erdalkalimetall und/oder verwandtem Metall hinreichend schnell ist. Die Messung erfolgt unter einem Inertgasstrom.

### Beispiel 3: Bestimmung des Lithiumgehalts eines Kathodenmaterials mittels eines beispielhaften erfindungsgemäßen Verfahrens

Die Probenpräparation eines lithiumhaltigen Kathodenmaterials erfolgt unter Schutzgas. Beispielsweise werden zunächst Sekundärbatterien in ihre Bestandteile zerlegt und das lithiumhaltige Kathodenmaterial mit oder ohne Trägermaterial anschließend mit einem geeigneten Lösungsmittel gewaschen. Daraufhin wird das Lösungsmittel entfernt und ein Aliquot des getrockneten lithiumhaltigen Kathodenmaterials in einen Tiegel überführt. Im Fall von Tiegeln ohne Goldbeschichtung wird zusätzlich Goldfolie oder Goldpulver im Überschuss als Reaktionspartner in die Tiegel gegeben. Im Fall von goldbeschichteten Tiegeln genügt das Kathodenmaterial. Im Anschluss wird der Tiegel verschlossen und der DSC zugeführt. Der Tiegel wird zusammen mit einem Referenztiegel einem Temperaturänderungsprogramm unterzogen. Dazu wird die Probe und die Referenz mit einer dynamischen Heizrate, z.B. 3-30 K/min, unter einem Inertgasstrom auf eine geeignete Temperatur, wie z.B. 500 °C erhitzt.

### Auswertung

Zur Bestimmung der Lithium-Konzentration im Kathodenmaterial wird eine Kalibriermessung mit einer geeigneten Menge reinem Lithium (Kalibrierprobe) im gewählten Tiegelmaterial der Probenmessungen (goldbeschichtet oder unter Hinzugabe von Goldfolie oder Goldpulver, *Kalibrierung 1*) sowie in einem gleichen Tiegel ohne Goldfolie, Goldpulver oder Goldbeschichtung (*Kalibrierung 2*) unter Verwendung der gleichen Messparameter der Probenmessung durchgeführt. Anschließend wird das Messsignal ausgewertet, vorzugsweise durch Integration, über den Temperaturbereich der detektierten exothermen Gold-Lithium-Reaktion. Die entstandene Reaktionswärme der Bildung der Gold-Lithium-Legierung ergibt sich durch Subtraktion des Integralwerts der *Kalibrierung 2* von dem Wert von *Kalibrierung 1* (*Au-Li-Referenz*). Im Anschluss wird das Messsignal der exothermen Gold-Lithium-Reaktion der Probenmessung analog integriert und die entstandene Reaktionswärme entsprechend zur Referenz ermittelt (*Au-Li-Probe*). Teilt man nun *Au-Li-Probe* durch *Au-Li-Referenz* und multipliziert das Verhältnis mit der Einwaage der Kalibriermessung 1, ergibt sich der umgesetzte Lithiumanteil des Kathodenmaterials.

### Beispiel 4: Einfluss von Gold

Das in Beispiel 1 beschriebene Verfahren wurde mit einer Lithiumfolie (Einwaage: 0,7 mg) als Probe in einem Edelstahltiegel mit Goldbeschichtung und mit einer Lithiumfolie (Einwaage: 0,4 mg) als Probe, die zusammen mit einer Goldfolie in einen Edelstahltiegel gegeben wurde, durchgeführt. Ferner wurde das in Beispiel 1 beschriebene Verfahren durchgeführt, nur, dass die Lithiumfolie (Einwaage: 2 mg) ohne Goldzugabe in einem Edelstahltiegel gemessen wurde. Die Ergebnisse sind in Fig. 2 dargestellt. Dabei entspricht die gestrichelte Linie der Messung von Lithiumfolie in dem Edelstahltiegel mit Goldbeschichtung, die Strich-Punkt-Linie der Messung von Lithiumfolie zusammen mit Gold-Folie und die durchgezogene Linie der Messung ohne Gold. Messparameter: Gerät: Netzsch DSC 204 F1 Phoenix; Heizrate: 10 K/min; Atmosphäre: Stickstoff (20 ml/min).

Dabei sind deutliche Messsignale bei der Anwesenheit von Gold erkennbar, die auf die exotherme Reaktion zwischen Gold und Lithium zurückzuführen sind. Die Integralwerte der Messsignale sind als schraffierte Flächen dargestellt und betragen: 7663 a.u. (Lithiumfolie in goldbeschichteten Tiegel), 1874 a.u. (Lithiumfolie mit Goldfolie in Edelstahltiegeltiegel), 263 a.u. (Lithiumfolie in Edelstahltiegel).

### Beispiel 5: Bestimmung des Ladungszustands von Elektrodenmaterialien

Über den Lithiumanteil in Elektrodenmaterialien kann der Ladungszustand (SOC) ermittelt werden, da der Lithiumgehalt des Elektrodenmaterials vom SOC abhängt. Das in Beispiel 3 beschriebene Verfahren wurde mit LiCoO₂ als Elektrodenmaterial durchgeführt. Zudem wurde das in Beispiel 3 beschriebene Verfahren mit LiCoO₂ als Elektrodenmaterial ohne die Anwesenheit von Gold durchgeführt. Als Kalibrierprobe wurde Lithiumfolie eingesetzt. Die Messergebnisse und -parameter sind in Tabelle 1 dargestellt.

**Tabelle 1: Messergebnisse eines beispielhaften Verfahrens zur Bestimmung des SOC in Elektrodenmaterialien**

| Material | Tiegel | SOC | Einwaage /mg | DSC Signal [a. u.] | Heizrate /K·min⁻¹ | Inerter Gasfluss (N₂) /mL·min⁻¹ |
|---|---|---|---|---|---|---|
| Li Folie | Gold | - | 0,9 | 7663 | 10 | 20 |
| Li Folie | Edelstahl | - | 2,0 | 263 | 10 | 20 |
| LiCoO₂ | Gold | 100 | 12,0 | 402 | 10 | 20 |
| LiCoO₂ | Edelstahl | 100 | 7,3 | 353 | 10 | 20 |

Aus obigen Ergebnissen in Tabelle 1 kann ein Lithiumgehalt im LiCoO₂ von 0,06 mg bestimmt werden.

### Beispiel 6: Einfluss der Trocknung der Probe

Das in Beispiel 3 beschriebene Verfahren wurde mit Lithiummanganat als Probe in einem goldbeschichteten Edelstahltiegel durchgeführt. Dabei wurde die Probe für eine Messung getrocknet und für eine weitere Messung nicht getrocknet. Das Ergebnis ist in Fig. 3 dargestellt. Dabei stellt die gestrichelte Linie die Messung mit nicht getrockneter Probe und die durchgezogene Linie die Messung mit getrockneter Probe dar. Messparameter: Gerät: Netzsch DSC 204 F1 Phoenix; Heizrate: 10 K/min; Atmosphäre: Stickstoff (20 ml/min).

Einwaagen: 9,9 mg getrocknete Probe; 10,1 mg nicht getrocknete Probe. Die Integralwerte der Messsignale sind als schraffierte Flächen dargestellt und betragen: 766,6 a.u. (nicht getrocknete Probe), 257 a.u. (getrocknete Probe).

Aus dem Vergleich der Messdaten für eine getrocknete und eine nicht getrocknete Probe ist ersichtlich, dass das Lösungsmittel eine Effektüberlagerung hervorruft. Der Signalverlauf ist hierbei signifikant größer als der beobachtete Signalverlauf der Gold-Lithium-Reaktion der getrockneten Probe.

### Beispiel 7: Bestimmung von Natrium

Das in Beispiel 1 beschriebene Verfahren wurde mit elementarem Natrium (Einwaage: 1,7 mg) als Probe in einem Edelstahltiegel mit Goldbeschichtung durchgeführt. Ferner wurde das in Beispiel 1 beschriebene Verfahren durchgeführt, nur, dass das elementare Natrium (Einwaage: 2,2 mg) ohne Goldzugabe in einem Edelstahltiegel gemessen wurde. Die Ergebnisse sind in Fig. 4 dargestellt. Dabei entspricht die gestrichelte Linie der Messung von Natrium in dem Edelstahltiegel mit Goldbeschichtung und die durchgezogene Linie der Messung von Natrium ohne Gold. Messparameter: Gerät: Netzsch DSC 204 F1 Phoenix; Heizrate: 10 K/min; Atmosphäre: Stickstoff (20 ml/min).

Es ist ein deutliches Messsignal bei der Anwesenheit von Gold erkennbar, das auf die exotherme Reaktion zwischen Gold und Natrium zurückzuführen sind. Die Integralwerte der Messsignale sind als schraffierte Flächen dargestellt und betragen: 4963 a.u. (Natrium im goldbeschichteten Tiegel) und 1648 a.u. (Natrium im Edelstahltiegel).

### Beispiel 8: Bestimmung von Kalium

Das in Beispiel 1 beschriebene Verfahren wurde mit elementarem Kalium (Einwaage: 1,1 mg) als Probe in einem Edelstahltiegel mit Goldbeschichtung durchgeführt. Ferner wurde das in Beispiel 1 beschriebene Verfahren durchgeführt, nur, dass das elementare Kalium (Einwaage: 0,4 mg) ohne Goldzugabe in einem Edelstahltiegel gemessen wurde. Die Ergebnisse sind in Fig. 5 dargestellt. Dabei entspricht die gestrichelte Linie der Messung von Kalium in dem Edelstahltiegel mit Goldbeschichtung und die durchgezogene Linie der Messung von Kalium ohne Gold. Messparameter: Gerät: Netzsch DSC 204 F1 Phoenix; Heizrate: 10 K/min; Atmosphäre: Stickstoff (20 ml/min).

Es ist ein deutliches Messsignal bei der Anwesenheit von Gold erkennbar, das auf die exotherme Reaktion zwischen Gold und Kalium zurückzuführen sind. Die Integralwerte der Messsignale sind als schraffierte Flächen dargestellt und betragen: 1702 a.u. (Kalium im goldbeschichteten Tiegel) und 1226 a.u. (Kalium im Edelstahltiegel).

### Beispiel 9: Bestimmung von Calcium

Das in Beispiel 1 beschriebene Verfahren wurde mit elementarem Calcium (Einwaage: 1,3 mg) als Probe in einem Edelstahltiegel mit Goldbeschichtung durchgeführt. Das Ergebnis ist in Fig. 6 dargestellt. Messparameter: Gerät: Netzsch STA 449 F3 Jupiter; Heizrate: 10 K/min; Atmosphäre: Stickstoff (70 ml/min).

Es ist ein deutliches Messsignal bei der Anwesenheit von Gold erkennbar, das auf die exotherme Reaktion zwischen Gold und Calcium zurückzuführen ist. Der Integralwert des Messsignals ist als schraffierte Fläche dargestellt und beträgt 1278 a.u.

### Beispiel 10: Bestimmung von Lithium unter Verwendung eines isothermen Heizsegments

Das in Beispiel 2 beschriebene Verfahren wurde mit einer Lithiumfolie (Einwaage 6,0 mg) als Probe in einem Edelstahltiegel mit Goldbeschichtung durchgeführt. Ferner wurde die gleiche Messung ohne Probe als Referenz durchgeführt. Das Ergebnis ist in Fig. 7 dargestellt, wobei oben die Messergebnisse und unten das verwendete Temperaturänderungsprogramm gezeigt werden. Messparameter: Netzsch DSC 204 F1 Phoenix; Heizrate bis 225 °C: 30 K/min; Isotherm für 1 h; Atmosphäre: Stickstoff (20 ml/min).

Auch hier ist ein deutliches Messsignal bei der Anwesenheit von Gold erkennbar, das auf die exotherme Reaktion zwischen Gold und Lithium zurückzuführen ist. Der Integralwert des Messsignals ist als schraffierte Fläche dargestellt und beträgt 2690 a.u. Der Integralwert der Referenz beträgt 235 a.u.

### Beispiel 11: Messung von Lithiummanganat als Kathodenmaterial mit SOC 100

Das in Beispiel 3 beschriebene Verfahren wurde mit Lithiummanganat mit einem SOC 100 (Einwaage: 9,9 mg) als Probe in einem Edelstahltiegel mit Goldbeschichtung durchgeführt. Ferner wurde das in Beispiel 3 beschriebene Verfahren durchgeführt, nur, dass das Lithiummanganat mit SOC 100 (Einwaage: 14 mg) ohne Goldzugabe in einem Edelstahltiegel gemessen wurde. Die Ergebnisse sind in Fig. 8 dargestellt. Dabei entspricht die gestrichelte Linie der Messung von Lithiummanganat (SOC 100) in dem Edelstahltiegel mit Goldbeschichtung und die durchgezogene Linie der Messung von Lithiummanganat (SOC 100) ohne Gold. Messparameter: Gerät: Netzsch DSC 204 F1 Phoenix; Heizrate: 10 K/min; Atmosphäre: Stickstoff (20 ml/min). Die Integralwerte der Messsignale sind als schraffierte Flächen dargestellt und betragen: 257 a.u. (mit Gold) und 207 a.u. (ohne Gold).

Es zeigt sich, dass durch die Verwendung von Gold eine deutliche Signalverstärkung erfolgt, die der Gold-Lithium-Reaktion zugeordnet werden kann.

### Beispiel 12: Messung von Lithiummanganat als Kathodenmaterial mit unterschiedlichen SOC

Das in Beispiel 3 beschriebene Verfahren wurde mit Lithiummanganat mit einem SOC 100 (Einwaage: 9,9 mg) und mit Lithiummanganat mit einem SOC 50 (Einwaage: 6,3 mg) als Probe in einem Edelstahltiegel mit Goldbeschichtung durchgeführt. Die Ergebnisse sind in Fig. 9 dargestellt. Dabei entspricht die gestrichelte Linie der Messung von Lithiummanganat mit SOC 100 und die durchgezogene Linie der Messung von Lithiummanganat mit SOC 50. Messparameter: Gerät: Netzsch DSC 204 F1 Phoenix; Heizrate: 10 K/min; Atmosphäre: Stickstoff (20 ml/min). Die Integralwerte der Messsignale sind als schraffierte Flächen dargestellt und betragen: 257 a.u. (SOC 100) und 381 a.u. (SOC 50).

Beim Vergleich der ermittelten Messsignale zeigt sich, dass sich einhergehend mit den unterschiedlichen Ladungszuständen (SOC) ein signifikanter Unterschied in den ermittelten Integralwerten ergibt. Damit kann mit dem erfindungsgemäßen Verfahren auf den Ladungszustand eines Elektrodenmaterials geschlossen werden.

### Beispiel 13: Messung von Lithiumcobaltat als Kathodenmaterial mit SOC 100

Das in Beispiel 3 beschriebene Verfahren wurde mit Lithiumcobaltat mit einem SOC 100 (Einwaage: 12 mg) als Probe in einem Edelstahltiegel mit Goldbeschichtung durchgeführt. Ferner wurde das in Beispiel 3 beschriebene Verfahren durchgeführt, nur, dass das Lithiumcobaltat mit SOC 100 (Einwaage: 7,3 mg) ohne Goldzugabe in einem Edelstahltiegel gemessen wurde. Die Ergebnisse sind in Fig. 10 dargestellt. Dabei entspricht die gestrichelte Linie der Messung von Lithiumcobaltat (SOC 100) in dem Edelstahltiegel mit Goldbeschichtung und die durchgezogene Linie der Messung von Lithiumcobaltat (SOC 100) ohne Gold. Messparameter: Gerät: Netzsch DSC 204 F1 Phoenix; Heizrate: 10 K/min; Atmosphäre: Stickstoff (20 ml/min). Die Integralwerte der Messsignale sind als schraffierte Flächen dargestellt und betragen: 412 a.u. (mit Gold) und 384 a.u. (ohne Gold).

Es zeigt sich, dass durch die Verwendung von Gold eine deutliche Signalverstärkung erfolgt, die der Gold-Lithium-Reaktion zugeordnet werden kann.

### Beispiel 14: Messung von Lithiumcobaltat als Kathodenmaterial mit unterschiedlichen SOC

Das in Beispiel 3 beschriebene Verfahren wurde mit Lithiumcobaltat mit einem SOC 100 (Einwaage: 12,0 mg) und mit Lithiumcobaltat mit einem SOC 0 (Einwaage: 10,3 mg) als Probe in einem Edelstahltiegel mit Goldbeschichtung durchgeführt. Die Ergebnisse sind in Fig. 11 dargestellt. Dabei entspricht die gestrichelte Linie der Messung von Lithiumcobaltat mit SOC 100 und die durchgezogene Linie der Messung von Lithiumcobaltat mit SOC 0. Messparameter: Gerät: Netzsch DSC 204 F1 Phoenix; Heizrate: 10 K/min; Atmosphäre: Stickstoff (20 ml/min). Die Integralwerte der Messsignale sind als schraffierte Flächen dargestellt und betragen: 469 a.u. (SOC 100) und 270 a.u. (SOC 50).

Beim Vergleich der ermittelten Messsignale zeigt sich, dass sich einhergehend mit den unterschiedlichen Ladungszuständen (SOC) ein signifikanter Unterschied in den ermittelten Integralwerten ergibt. Damit kann mit dem erfindungsgemäßen Verfahren auf den Ladungszustand eines Elektrodenmaterials geschlossen werden.

### Beispiel 15: Messung von Lithium mit unterschiedlichen Heizraten

### 15A: Das in Beispiel 4 beschriebene Verfahren wird mit folgenden Parametern durchgeführt:

Die Einwaage der Folie im Tiegel mit Au Beschichtung betrug 7,8 mg, und im Tiegel ohne Beschichtung 5,5 mg. Als Messgerät wurde ein Netzsch DSC 204 F1 Phoenix mit einer Heizrate von 3 K/min mit einer Stickstoff-Atmosphäre (20 ml/min) verwendet. Die Ergebnisse sind in Fig. 12 gezeigt Die gestrichelte Linie zeigt das Messsignal der Lithiumfolie im Edelstahltiegel. Die durchgezogene Linie stellt das Messsignal der Lithiumfolie im Edelstahltiegel ohne Goldbeschichtung der. Die schraffierten Flächen unterhalb der Linien stellen die Integrale der exothermen Signale dar. Aus der Figur zeigt sich ein deutlicher Unterschied in den Messsignalen.

### 15A: Das in Beispiel 4 beschriebene Verfahren wird mit folgenden Parametern durchgeführt:

Die Einwaage der Folie im Tiegel mit Au Beschichtung betrug 3,3 mg, und im Tiegel ohne Beschichtung 6,0 mg. Als Messgerät wurde ein Netzsch DSC 204 F1 Phoenix mit einer Heizrate von 30 K/min mit einer Stickstoff-Atmosphäre (20 ml/min) verwendet. Die Ergebnisse sind in Fig. 13 gezeigt Die gestrichelte Linie zeigt das Messsignal der Lithiumfolie im Edelstahltiegel. Die durchgezogene Linie stellt das Messsignal der Lithiumfolie im Edelstahltiegel ohne Goldbeschichtung der. Die schraffierten Flächen unterhalb der Linien stellen die Integrale der exothermen Signale dar. Aus der Figur zeigt sich ebenfalls ein deutlicher Unterschied in den Messsignalen.

## Patentansprüche

1. Verfahren zur thermoanalytischen Bestimmung von Alkali- und/oder Erdalkalimetallen und/oder verwandten Metallen, umfassend
Bereitstellen einer Probe umfassend mindestens ein Alkali- und/oder Erdalkalimetall und/oder verwandtes Metall;
Durchführen einer thermoanalytischen Messung der Probe;
wobei die Probe bei der thermoanalytischen Messung mit Gold in Kontakt steht, und
wobei die Probe im Wesentlichen frei von Lösungsmitteln ist.

2. Verfahren nach Anspruch 1, wobei die Probe vor der Durchführung der thermoanalytischen Messung getrocknet wird.

3. Verfahren nach Anspruch 1 oder 2, wobei bei der thermoanalytischen Messung zumindest ein Teil des mindestens einen Alkali- und/oder Erdalkalimetalls und/oder verwandten Metalls in der Probe umfassend mindestens ein Alkali- und/oder Erdalkalimetall und/oder verwandtes Metallmit zumindest einem Teil des Goldes reagieren gelassen wird.

4. Verfahren nach einem der vorstehenden Ansprüche, wobei es sich bei der thermoanalytischen Messung um eine Kalorimetrie und/oder eine Differenz-Thermoanalyse handelt, insbesondere wobei es sich bei der thermoanalytischen Messung um eine dynamische Differenzkalorimetrie handelt.

5. Verfahren nach einem der vorstehenden Ansprüche, wobei die thermoanalytische Messung die Durchführung eines Temperaturänderungsprogramms umfasst, wobei das Temperaturänderungsprogramm das Erhitzen der Probe von einer ersten Temperatur auf eine zweite Temperatur mittels einer Heizrate umfasst, wobei die zweite Temperatur maximal 1000 °C beträgt, optional wobei die Heizrate 3 bis 30 K/min beträgt, und/oder wobei das Temperaturänderungsprogramm das Halten der Probe bei einer Temperatur für eine Haltezeit umfasst, optional wobei die Temperatur mindestens 20 °C beträgt und/oder wobei die Haltezeit mindestens 15 min beträgt.

6. Verfahren nach einem der vorstehenden Ansprüche, wobei das Gold bezogen auf das mindestens eine Alkali- und/oder Erdalkalimetall und/oder verwandte Metall im Überschuss vorliegt und/oder wobei das Gewichtsverhältnis der Probe zum Gold 1 : ≥1 beträgt.

7. Verfahren nach einem der vorstehenden Ansprüche, wobei die Probe vor der thermoanalytischen Messung in einen Messbehälter gefüllt und die Messung mit der Probe in dem Messbehälter durchgeführt wird.

8. Verfahren nach Anspruch 7, wobei der Messbehälter das Gold umfasst und/oder wobei die Probe vor dem Einfüllen in den Messbehälter mit Gold vermengt und die Probe mit dem Gold in den Messbehälter eingefüllt wird.

9. Verfahren nach Anspruch 7 oder 8, wobei der Messbehälter vergoldet ist oder aus Gold besteht und/oder wobei der Messbehälter ein Hochdruckbehälter sein kann.

10. Verfahren nach einem der vorstehenden Ansprüche, wobei es sich bei der Probe umfassend mindestens ein Alkali- und/oder Erdalkalimetall und/oder verwandtes Metall um zumindest einen Teil einer Elektrode und/oder um Elektrodenmaterial handelt.

11. Verfahren nach Anspruch 10, wobei das Verfahren eine Bestimmung des Ladungszustands (SOC) der Elektrode und/oder des Elektrodenmaterials umfasst.

12. Verwendung von Gold zur thermoanalytischen Messung einer Probe umfassend mindestens ein Alkali- und/oder Erdalkalimetall und/oder verwandtes Metall,
wobei die Probe im Wesentlichen frei von Lösungsmitteln ist, und
wobei die Probe bei der thermoanalytischen Messung mit dem Gold in Kontakt steht.

13. Verwendung nach Anspruch 12, wobei die Probe umfassend mindestens ein Alkali- und/oder Erdalkalimetall und/oder verwandtes Metall zumindest ein Teil einer Elektrode und/oder ein Elektrodenmaterial ist.

14. Verwendung nach Anspruch 12 oder 13, wobei bei der thermoanalytischen Messung zumindest ein Teil des mindestens einen Alkali- und/oder Erdalkalimetalls und/oder verwandten Metalls in der Probe umfassend mindestens ein Alkali- und/oder Erdalkalimetall und/oder verwandtes Metallmit zumindest einem Teil des Goldes reagieren gelassen wird.

15. Verwendung nach einem der Ansprüche 12 bis 14, wobei die thermoanalytische Messung eine Kalorimetrie und/oder eine Differenz-Thermoanalyse ist, insbesondere wobei die thermoanalytische Messung eine dynamische Differenzkalorimetrie ist.
